# FASCICULE DE BREVET EUROPEEN

(11) **EP 2 567 472 B1**
(45) Date de publication et mention de la délivrance du brevet: **29.08.2018**
(21) Numéro de dépôt: 11723572.1
(22) Date de dépôt: 05.05.2011
(51) Int. Cl.: H04B 7/185

(54) **SYSTEME HYBRIDE TERRESTRE-SATELLITAIRE DE RADIOCOMMUNICATION CELLULAIRE A CAPACITE ELEVEE**
TERRISTRISCH-SATELLITEN HYBRIDSYSTEM FÜR ZELLULARE DRAHTLOSE KOMMUNIKATION MIT HOHEM KAPAZITÄT
TERRESTRIAL-SATELLITE HYBRID SYSTEM FOR HIGH CAPACITY CELLULAR WIRELESS COMMUNICATIONS

(30) Priorité: 07.05.2010 FR 1053589
(43) Date de publication de la demande: 13.03.2013
(73) Titulaire: Centre National d'Etudes Spatiales, 75001 Paris (FR)
(72) Inventeur: BOUSTIE, Christelle, 31650 Lauzerville (FR); SCOT, Gaël, 31000 Toulouse (FR)
(74) Mandataire: Gaillarde, Frédéric F. Ch.
(86) Numéro de dépôt international: PCT/FR2011/051021
(87) Numéro de publication internationale: WO 2011/138563

(56) Documents cités:
- EP-A2- 0 762 254
- WO-A1-99/10994
- US-A1- 2003 054 760
- US-A1- 2005 164 701

## Description

L'invention se rapporte à un système hybride de radiocommunication cellulaire intégrant une composante satellitaire dans un réseau cellulaire terrestre à haute densité et destiné à fournir des services de radiocommunication mobile à haut débit.

Des systèmes de radiocommunication mobile terrestre notamment le système européen UMTS (dénomination anglaise de Universal Mobile Telecommunication System), son évolution HSPA (dénomination anglaise de High Speed Packet Access) et le système américain CDMA2000 ainsi que ses évolutions sont déjà opérationnels et proposent des services dits de troisième génération ou 3G à débit élevé atteignant jusqu'à 1 Mbits/s.

Les normes des systèmes de nouvelle génération dits de quatrième génération ou 4G telles que LTE (Long Term Evolution 3GPP Technology) et WIMAX IEEE 802.16 (Worldwide Interoperability for Microwave Access) sont en cours d'élaboration et proposent des services à débits plus élevés encore. Il est prévu de déployer de tels systèmes 4G à partir de l'horizon 2010.

Tous ces systèmes de troisième et quatrième génération peuvent s'enrichir d'une composante spatiale à base de satellites destinée à compléter et à recouvrir, sous la forme de cellules satellitaires dites parapluie, les couvertures de cellules terrestres de taille beaucoup plus petite qui forment la composante terrestre et sont déployées notamment en zones urbaines où leur niveau de champ important assure une bonne qualité de service et où la densité de population est suffisante à les rentabiliser, ce qui les rend compatibles des conditions de propagation radioélectrique du milieu urbain qui sont difficiles pour les satellites.

Voir les documents WO-A2- 2007/047370 et EP-A2-762 254.

Afin d'accroitre la capacité de ces systèmes hybrides de télécommunication, le gain procuré par la réutilisation des fréquences au sein d'une bande allouée de fréquences terrestres à la composante terrestre est augmenté par la diminution de la taille des cellules terrestres.

Corrélativement, la taille des cellules parapluie doit être diminuée de manière à adapter la granularité de l'ensemble des cellules parapluie à la granularité de l'ensemble des cellules terrestres englobées dans la cellule parapluie et à augmenter l'efficacité de la réutilisation des fréquences exploitée au sein d'une bande allouée de fréquences satellitaires pour la composante satellitaire.

Indépendamment du fait que la bande allouée de fréquences terrestres et la bande allouée de fréquences satellitaires peuvent être identiques, partiellement identiques ou disjointes, des interférences entre les cellules terrestres et les cellules parapluie satellitaires ont lieu du fait des instabilités de positionnement ou de forme du ou des faisceaux satellitaires à l'origine des cellules parapluie par rapport aux cellules terrestres, les instabilités de positionnement ou de forme ayant des causes diverses telles que la sensibilité des antennes aux variations de température ou l'imperfection du contrôle d'attitude de la plateforme du satellite.

Le problème technique est de diminuer les interférences entre les cellules terrestres et les cellules parapluie satellitaires pour augmenter la capacité globale du système de télécommunication hybride.

A cet effet, l'invention a pour objet un système hybride de radiocommunication cellulaire comprenant :
- un réseau de stations de base terrestres, interconnectées entre elles et reliées à une infrastructure terrestre, aptes chacune, dans une sous-bande de fréquences associée, à émettre suivant une liaison descendante aller et/ou à recevoir suivant une liaison montante retour des signaux de radiocommunication de service et définissant chacune par sa portée radioélectrique une couverture montante et/ou descendante d'une cellule terrestre de radiocommunication,
- au moins un satellite de communication, relié à l'infrastructure terrestre par au moins une station d'accès au travers d'une liaison bidirectionnelle de raccordement, et apte à émettre suivant une liaison descendante satellitaire aller et/ou à recevoir suivant une liaison montante satellitaire retour des signaux de radiocommunication de service répartis dans des faisceaux satellitaires de radiocommunication, les faisceaux satellitaires étant associés chacun à une bande de fréquence et définissant chacun par sa portée radioélectrique au sol une couverture satellitaire montante et/ou descendante d'une cellule parapluie satellitaire,
- un ensemble de terminaux de service de communication aptes à émettre et/ou à recevoir les signaux de radiocommunication, et répartis dans les cellules terrestres et les cellules satellitaires,
- des moyens d'affectation de ressources de transmission, chacune étant définie par une sous-bande de fréquences et/ou une tranche de temps et/ou un code, aux stations de base, respectivement aux faisceaux satellitaires, les sous-bandes étant déterminées par rapport à une première bande de fréquences allouée à l'ensemble des stations de base et à une deuxième bande de fréquences allouée aux faisceaux satellitaires,
caractérisé en ce que
les stations de base sont réparties de manière discernable par cellule satellitaire selon une fonction de répartition invariante dans le temps,
et le système comprend des moyens de maintien de la congruence, en permanence et suivant un même sens de liaison, de la couverture de chaque cellule satellitaire par rapport aux couvertures des cellules terrestres associées aux stations de base contenues dans ladite cellule satellitaire, la couverture d'une cellule satellitaire étant congruente à un ensemble prédéterminé de couvertures terrestres lorsque ledit ensemble prédéterminé de couvertures est inclus totalement dans la couverture satellitaire.

Suivant des modes particuliers de réalisation, le système hybride comporte l'une ou plusieurs des caractéristiques suivantes :
- la même bande de fréquences est partagée par les stations de base et le satellite ;
- le faisceau satellitaire correspondant de chaque cellule satellitaire présente un angle d'ouverture caractéristique θ défini comme l'angle d'ouverture minimal pris sur l'ensemble des directions azimutales du faisceau par rapport à un plan de phase d'émission ou de réception du satellite, et l'angle d'ouverture minimal θ du faisceau correspondant de chaque cellule satellitaire est inférieur à une valeur d'angle comprise entre 0,5 degrés et quelques degrés et les moyens de maintenance de la congruence sont aptes à maintenir un dépointage Δθ du faisceau satellitaire inférieur en permanence à 0,05 degrés ;
- l'orbite du satellite est comprise dans la famille des orbites géostationnaires (GEO), des orbites fortement elliptiques (HEO) notamment de type Sycomores, Toundra ou Molnya et des orbites géosynchrones inclinées (IGSO) ;
- les moyens de maintien de la congruence comprennent des terminaux de calibration, distribués dans les cellules satellitaires et comportant chacun une antenne de réception satellitaire, l'antenne de réception satellitaire ayant un diagramme de rayonnement sensiblement omnidirectionnel sur un angle solide, correspondant à l'ensemble des élévations vues en parcourant l'ensemble des couvertures satellitaires et fonction du type d'orbite sur laquelle évolue le satellite ;
- chaque terminal de calibration comprend un moyen de mesure de puissance radioélectrique apte à mesurer la puissance d'un signal radioélectrique de liaison descendante spécifique à la calibration ou la puissance d'un signal de radiocommunication, la résolution de la mesure de puissance étant inférieure à 1 dB et la précision de la mesure étant inférieure à 5 dB, et un moyen de retransmission des mesures recueillies par le moyen de mesure et des positions des terminaux de calibration lorsqu'elles ne sont pas prédéterminées ;
- les moyens de maintenance de la congruence comprennent
des terminaux de calibration, distribués dans les cellules satellitaires et comportant chacun une antenne d'émission satellitaire, l'antenne d'émission satellitaire ayant un diagramme de rayonnement sensiblement omnidirectionnel sur un angle solide, correspondant à l'ensemble des élévations vues en parcourant l'ensemble des couvertures satellitaires et fonction du type d'orbite sur laquelle évolue le satellite, chaque terminal de calibration, comportant un moyen d'émission d'un signal radioélectrique sur une liaison satellitaire montante spécifique à la calibration ou de radiocommunication calibré en puissance,
et un moyen de mesure situé à bord du satellite ou d'une station d'accès apte à mesurer la puissance du signal radioélectrique de calibration de chaque terminal de calibration sur la liaison montante retour satellitaire correspondante, la résolution de la mesure de puissance étant inférieure à 1 dB et la précision de la mesure étant inférieure à 5 dB, et un moyen de retransmission des mesures recueillies par le moyen de mesure et des positions des terminaux de calibration lorsqu'elles ne sont pas prédéterminées ;
- le nombre de terminaux de calibration est supérieur ou égal à 50 ;
- des terminaux de calibration, sont disposés au niveau d'un certain nombre de stations de base dont la localisation est connue avec précision ;
- un certain nombre de terminaux de calibration sont disposés sur des répéteurs FEMTO destinés à améliorer la propagation des ondes à l'intérieur de bâtiments, chaque répéteur étant pourvue d'une unité de localisation, le terminal de calibration étant apte à émettre sa localisation par des informations de localisation fournies par l'unité de localisation ;
- des terminaux de calibration sont des terminaux de service de communication mobiles qui comprennent un moyen de localisation pris parmi l'ensemble formés par les récepteurs de positionnement global par une constellation de satellites et les moyens d'extraction d'informations de positionnement déterminé par un réseau terrestre mobile, le terminal de calibration étant apte à émettre sa localisation par des informations de localisation fournies par le moyen de localisation ;
- le système comprend un moyen de traitement apte à recevoir les informations de mesure de puissance associées à chaque terminal de calibration et à déterminer à partir d'un diagramme de rayonnement au sol attendu un angle de correction de dépointage commun à l'ensemble des faisceaux ou une correction de la formation des faisceaux satellitaires, le moyen de traitement étant raccordé au moyen ou aux moyens de mesures par une ou des liaisons de communication comprise parmi les liaisons d'un réseau sol de type Internet, les liaisons d'un réseau terrestre cellulaire, des liaisons satellite ;
- la précision de l'estimation de la correction requise dépend à la fois du nombre de total de terminaux de calibration dans la totalité des faisceaux satellitaires et/ou de la répartition des terminaux de calibration par faisceau satellitaire, de la précision de mesure des moyens de mesure de puissance, des diagrammes de rayonnement en émission et/ou en réception des antennes des terminaux de calibration ;
- le moyen de traitement est apte à corriger les faisceaux satellitaires par une estimation locale par faisceau, un nombre suffisant de terminaux de calibration étant prévu dans chaque faisceau ou une estimation globale intégrant la totalité des terminaux de calibration dans un unique diagramme de rayonnement fusionnant plusieurs faisceaux, une estimation étant comprise dans la famille des procédés formé par la méthode des moindre carrés, les méthodes de corrélation.

L'invention a également pour objet un procédé de maintien de la congruence de couvertures cellulaires terrestres d'un réseau de radiocommunication cellulaire avec des couvertures satellitaires servant de parapluie créées par au moins un satellite dans un système hybride de télécommunication tel que décrit ci-dessus, comprenant les étapes consistant en ce que :
des puissances de signaux radioélectriques de calibration sont mesurées soit par des terminaux de calibration fonctionnant en récepteur en liaison descendante aller, soit par des moyens de mesure situés à bord d'un satellite ou d'une station d'accès en liaison montante retour, et réacheminées à un moyen de traitement,
le moyen de traitement estime une correction requise en termes d'angle de dépointage sur une structure porteuse d'antenne satellite, ou de coefficients amplitude/déphasage d'éléments rayonnants, à partir des mesures de puissance recueillies à l'étape et de la fonction de répartition invariante dans le temps des stations de base dans les cellules satellitaires, la condition de congruence étant satisfaite pour chaque cellule satellitaire lorsque la couverture de chaque cellule satellitaire contient l'ensemble des couvertures des cellules terrestres associées aux stations de base déterminées par la fonction de répartition comme étant comprise dans la cellule satellitaire, et
la correction estimée à l'étape est appliquée au mécanisme de correction des faisceaux satellitaires.

L'invention sera mieux comprise à la lecture de la description d'une forme de réalisation qui va suivre, donnée uniquement à titre d'exemple et faite en se référant aux dessins sur lesquels :
- la figure 1 est une vue d'un système hybride de télécommunication selon l'invention permettant la maintien de la congruence sur la liaison descendante aller de faisceaux satellitaires par rapport aux cellules terrestres,
- la figure 2 est une vue d'un terminal de calibration destiné à calibrer la liaison satellitaire descendante aller et disposé au niveau d'unes station de base,
- la figure 3 est une vue d'un terminal de calibration destiné à calibrer la liaison satellitaire descendante aller et disposé sur une station de type FEMTO,
- la figure 4 est une vue d'un terminal de calibration destiné à calibrer la liaison satellitaire descendante aller et intégré dans un terminal de service de communication mobile,
- la figure 5 est une vue d'un système hybride de télécommunication selon l'invention permettant le maintien de la congruence sur la liaison montante retour de faisceaux satellitaires par rapport aux cellules terrestres,
- la figure 6 est une vue d'un terminal de calibration destiné à calibrer la liaison satellitaire montante retour et disposé au niveau d'une station de base,
- la figure 7 est une vue d'un terminal de calibration destiné à calibrer la liaison satellitaire montante retour et disposé sur un répéteur de type FEMTO,
- la figure 8 est une vue d'un terminal de calibration destiné à calibrer la liaison satellitaire montante retour et intégré dans un terminal de service de communication mobile,
- la figure 9 est un ordinogramme d'un procédé de maintien de la congruence de couvertures cellulaires terrestres d'un réseau de radiocommunication cellulaire avec des couvertures satellitaires servant de parapluie d'au moins un satellite, et
- la figure 10 est un ordinogramme d'une variante du procédé de maintien décrit à la figure 3.

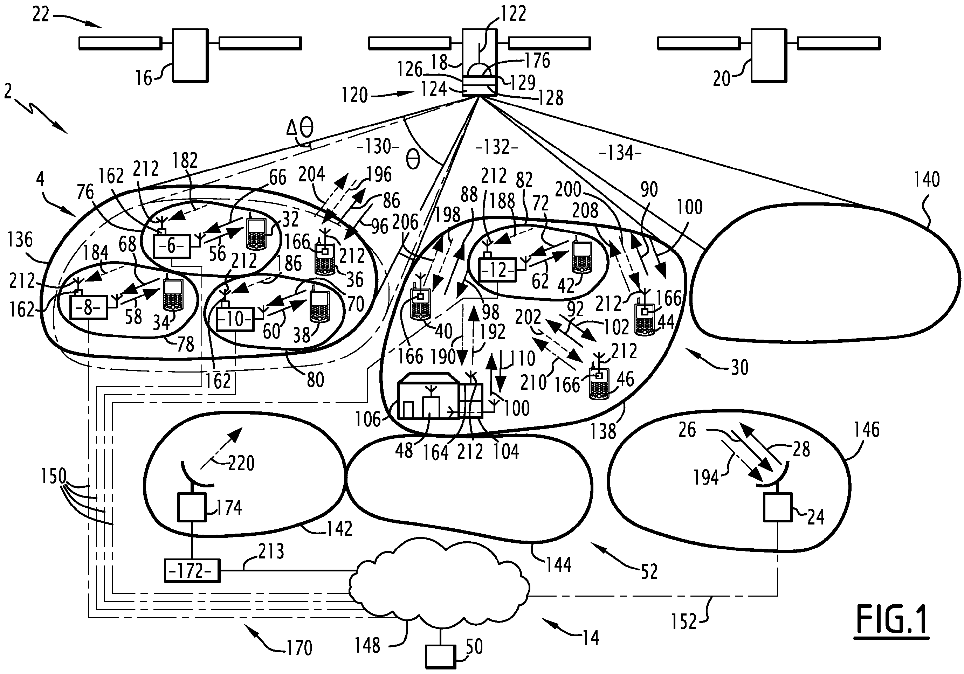

Suivant la figure 1, un système hybride de télécommunication 2 comprend un réseau 4 de stations de base terrestres 6, 8, 10, 12 servant de relais radioélectriques, quatre stations de base seulement ayant été représentées par simplification, une infrastructure terrestre 14 reliant les stations de bases entre elles, un ou plusieurs satellites, ici trois satellites 16, 18, 20 formant une constellation 22 et servant de relais radioélectriques, et au moins une station d'accès 24 reliant les satellites 16, 18, 20 à l'infrastructure terrestre 14 au travers d'une liaison d'accès bidirectionnelle composée d'une liaison retour descendante 26 et d'une liaison aller montante 28.

Le système hybride de télécommunication 2 comprend également un ensemble 30 de terminaux de service de communication 32, 34, 36, 38, 40, 42, 44, 46, 48 dont neuf seulement à titre d'exemple ont été représentés, aptes à émettre et/ou à recevoir les signaux de radiocommunication, des moyens 50 d'affectation de ressources de transmission aux stations de base 6, 8, 10, 12, à l'au moins un satellite 16, 18, 20 et aux terminaux de service 32, 34, 36, 38, 40, 42, 44, 46, et 48.

Le système hybride de télécommunication 2 comprend également des moyens de maintien de congruence de couverture 52.

Chaque station de base 6, 8, 10, 12 est apte à émettre respectivement suivant une liaison terrestre descendante aller associée différente 56, 58, 60, 62 et/ou à recevoir suivant une liaison terrestre montante retour associée différente 66, 68, 70, 72 des signaux de radiocommunication de services mobiles dans une sous-bande respective de fréquences associées, les sous bandes formant une première bande allouée de fréquences terrestres.

Pour chaque station de base 6, 8, 10, 12, les liaisons terrestres descendantes aller associées 56, 58, 60, 62, réduites à une seule liaison pour chaque station par souci de simplification, et les liaisons terrestres montantes retour associées 66, 68, 70, 72 définissent par leur portée radioélectrique une couverture respective d'une cellule terrestre 76, 78, 80, 82 de radiocommunication associée à la station de base.

Il a été supposé ici que pour une station de base donnée, les deux couvertures montante et descendante associées sont identiques.

Suivant la figure 1, les terminaux de service 32, 34, 38, 42 sont situés chacun dans une cellule terrestre respective distincte 76, 78, 80, 82 en étant relayé par une station de base correspondante 6, 8, 10, 12.

Les terminaux de service 32, 34, 38, 42 sont aptes chacun suivant un mode terrestre à émettre vers et/ou recevoir depuis la station de base 6, 8, 10, 12 en portée radioélectrique à laquelle ils sont rattachés, des signaux de radiocommunication sur une liaison montante retour 56, 58, 60, 62 et/ou une liaison descendante aller 66, 68, 70, 72.

Le mode de transmission terrestre est privilégié notamment en milieu urbain dans lequel les conditions de propagation radioélectrique sont difficiles. Toutefois, les terminaux qui se trouvent dans des cellules terrestres gardent l'aptitude à communiquer avec un satellite.

Ici, à titre d'exemple les terminaux de service de communication 36, 40, 44, 46 sont situés hors de portée radioélectrique d'une quelconque station de base du fait par exemple qu'ils se trouvent dans une zone géographique désertique ou faiblement peuplée, ce qui n'a pas justifié par mesure d'économie l'équipement d'une station de base terrestre dans cette zone, le soin étant laissé aux satellites de servir de relais de communication pour les terminaux de service se trouvant dans ladite zone.

Les terminaux de service de communication 36, 40, 44, 46 sont aptes chacun suivant un mode satellitaire à émettre de manière autonome vers et/ou recevoir depuis le satellite en visibilité et présentant la meilleure élévation pour les terminaux, ici le satellite 18 sur la figure 1, des signaux de radiocommunication sur une liaison montante retour associée 86, 88, 90, 92 et/ou une liaison descendante aller associée 96, 98, 100, 102.

Le terminal de service de communication 48 est ici situé hors de portée d'une station de base raccordée à l'infrastructure terrestre mais en portée d'un répéteur 104 de bâtiment définissant par sa portée radioélectrique ce qui est appelée de manière connue une cellule 106 de type FEMTO. Une cellule de type FEMTO également dénommée « femtocell » est classiquement une cellule de taille très faible, d'où l'emploi du préfixe « femto », correspondante à la taille d'un logement familial. Elle permet à un opérateur de proposer à son abonné un complément de couverture sur la base d'une installation personnelle généralement connectée à Internet par une liaison filaire haut-débit. Le répéteur 104 de bâtiment, lui-même hors de portée radioélectrique d'une quelconque station de base terrestre, pour des raisons analogues à celles décrites ci-dessus pour un terminal fonctionnant en mode satellitaire 36, 40, 44, 46, est apte à émettre de manière autonome vers et/ou recevoir depuis le satellite en visibilité, ici le satellite 18, des signaux de radiocommunication sur une liaison montante retour 108 et/ou une liaison descendante aller 110. Ainsi, le terminal de service de communication 48 est apte à émettre et/ou recevoir des signaux radioélectriques vers et/ou depuis le satellite 18 au travers du répéteur 104.

Ici la constellation 22 des satellites 16, 18, 20 est par exemple une constellation de type Sycomores formée par trois satellites 16, 18, 20 évoluant sur des orbites inclinées et déphasées entre elles de sorte qu'un satellite à tour de rôle se trouve en visibilité d'une zone de couverture terrestre à partir de laquelle en un point quelconque de la zone, le satellite est vue selon un angle d'élévation minimal garanti élevé. Ce type de constellation est particulièrement adapté pour une zone de couverture régionale situé dans les latitudes des zones tempérées, par exemple dans les latitudes de l'hémisphère nord voisines de + 45 degrés correspondantes à l'Europe. Une constellation de type Sycomores est décrite dans l'article de D. Rouffet et al. intitulé « a new concept for land mobile satellite communications », Satellite Systems for mobile communication and navigation, 1988, Fourth International Conférence IEEE, pages 138-142.

En variante, l'orbite du ou des satellites est comprise dans la famille des orbites géostationnaires (GEO), des orbites fortement elliptiques (HEO) de type Toundra ou Molnya et des orbites géosynchrones inclinées (IGSO) et plus généralement toute orbite utilisable pour un système de télécommunications par satellite.

Suivant la figure 1, le satellite 18 qui se trouve en visibilité des terminaux de communication de service mobile comprend un ensemble d'antennes 120 d'émission et/ou de réception des signaux radioélectriques reçus par et/ou émis par les terminaux de communication de service mobile, et une ou deux antennes 122 d'émission et/ou réception servant à réacheminer vers la station d'accès 24 les signaux reçus par l'ensemble d'antennes 120 suivant la liaison descendante retour 26 et à réacheminer vers les terminaux de service les signaux radioélectriques émis par l'infrastructure terrestre 14 et destinés aux terminaux de service suivant la liaison montante aller 28.

L'ensemble d'antennes 120 est par exemple constitué par une antenne d'émission 124 et par une antenne de réception 126, l'antenne d'émission 124 étant une antenne active à diagramme de rayonnement fixe par rapport à une structure porteuse de l'antenne d'émission 124, l'antenne de réception 126 étant également une antenne active à diagramme de rayonnement fixe par rapport à une structure de l'antenne de réception.

L'antenne d'émission 124, respectivement l'antenne de réception 126 comprennent chacune un moyen d'inclinaison distinct 128, 129, de dépointage de la structure de l'antenne en fonction d'une commande prédéterminée associée à chacune des antennes actives 124, 126.

En variante, les diagrammes des antennes actives sont modifiables par des changements des coefficients d'amplitude et/ou de déphasage d'éléments rayonnants constituant les antennes actives 124, 126.

En variante, une seule structure porteuse des antennes actives d'émission et de réception et un seul mécanisme de dépointage commun aux deux antennes sont prévus.

En variante les antennes actives d'émission et réception 124, 126 forment une unique antenne ayant des éléments rayonnants communs bi-bandes.

L'ensemble d'antennes 120 dans sa composante émission est apte à émettre des signaux radioélectriques suivant des liaisons descendantes satellitaires aller vers les terminaux de service, les signaux radioélectriques étant répartis dans des faisceaux satellitaires de radiocommunication, trois faisceaux satellitaires 130, 132, 134 étant ici seulement représentés pour simplifier la figure 1.

Chaque faisceau satellitaire 130, 132, 134 est associé à une sous-bande de fréquences et définit par sa portée radioélectrique au sol une couverture satellitaire respective d'une cellule parapluie satellitaire 136, 138, 140 représentée en trait plein.

D'autres cellules satellitaires 142, 144, 146 sont représentées à titre d'exemple dans lesquelles aucun terminal de service n'est représenté à l'instar de la cellule satellitaire 140 pour ne pas surcharger la figure.

Suivant la figure 1 qui représente une vue instantanée des couvertures des faisceaux satellitaires du satellite 18 en visibilité, la cellule parapluie satellitaire 136 recouvre les cellules terrestres 76, 78, 80 associées respectivement aux stations de base 6, 8, 10 et le terminal de service 36 hors de portée d'une quelconque station de base.

La cellule parapluie satellitaire 138 recouvre la cellule terrestre 82, les terminaux de service 40, 44, 46 hors de portée d'une quelconque station de base et la cellule de type FEMTO 106 contenant le répéteur 104 et le terminal de service 48.

L'infrastructure terrestre 14 comprend une ossature de réseau 148, par exemple de type Internet, des liaisons des connections 150 reliant chaque station de base 6, 8, 10, 12 à l'ossature de réseau 148, et une liaison de connexion 152 de la station d'accès satellite 24 à l'ossature de réseau 148.

Les moyens d'affectation 50 de ressources de transmission sont connectés à l'ossature de réseau 148 et sont aptes à affecter des ressources de transmissions à chaque station de base 6, 8, 10, 12, respectivement à chaque faisceau satellitaire 130, 132, 134 au travers d'une liaison - qu'elle soit satellitaire ou non - non représentée sur la figure 1.

Chaque ressource de transmission est définie par une sous-bande de fréquences et/ou une tranche de temps et/ou un code, affectée aux stations de base 6, 8, 10, 12, respectivement aux faisceaux satellitaires 130, 132, 134, les sous-bandes étant déterminées par rapport à une première bande de fréquences allouée à l'ensemble des stations de base 6, 8, 10, 12 et à une deuxième bande de fréquences allouée aux faisceaux satellitaires 130, 132, 134.

Ici, la même bande de fréquences est partagée par les stations de base 6, 8, 10, 12 et le satellite 18.

En variante, la première bande allouée de fréquences terrestres et la deuxième bande allouée de fréquences satellitaires sont identiques, partiellement identiques ou disjointes,
Les contours des cellules satellitaires 136, 138, 140 ont été déterminés de sorte que les stations de base 6, 8, 10, 12 soient réparties de manière discernable par cellule satellitaire136, 138 selon une fonction de répartition invariante dans le temps.

La couverture d'une cellule satellitaire est dite congruente à un ensemble prédéterminé de couvertures de cellules terrestres lorsque ledit ensemble prédéterminé de couvertures est inclus entièrement dans la couverture satellitaire, c'est-à-dire les frontières des cellules terrestres réparties dans la cellule satellitaire suivant la fonction de répartition prédéterminée sont entourées par la frontière de la cellule satellitaire correspondante.

Les moyens de maintien 52 de la congruence sont aptes à maintenir la couverture de chaque cellule satellitaire de liaison descendante aller par rapport aux couvertures des cellules terrestres de liaison descendante aller associés aux stations de base contenues dans ladite cellule satellitaire.

Les moyens de maintien 52 de la congruence en liaison de service descendante aller comprennent des terminaux de calibration 162, 164, 166 distribués dans les cellules satellitaires 130, 132, 134, des moyens 170 de réacheminent des mesures des terminaux de calibration 162, 164, 166, un moyen de traitement 172 de mesures de calibrations émises par les terminaux de calibration destiné à l'élaboration de commandes de corrections, une station satellitaire de télécommande 174 connectée au moyen de traitement 172 formant un moyen de réacheminement 174 des commandes de correction au satellite 18, un mécanisme de correction 176 du diagramme de rayonnement en émission du satellite 18, ici le mécanisme d'inclinaison 128 du support de l'antenne active d'émission 124.

Les terminaux de calibration 162, 164, 166 peuvent être classés en trois types de terminaux, les terminaux de premier type 162 disposés chacun sur une station de base différente, les terminaux de deuxième type disposés sur un répéteur d'une cellule de type FEMTO, et les terminaux de troisième type intégrés dans des terminaux de service fonctionnant en mode satellite.

Un terminal de premier type 162 est disposé ici sur chaque station de base 6, 8, 10, 12 en étant apte à recevoir dans de bonnes conditions de propagation les signaux de calibration suivant une liaison satellitaire descendante aller associée 182, 184, 186, 188 et à renvoyer la mesure au moyen de la station de base associée 6, 8, 10, 12 par exemple.

Un terminal de deuxième type 164 est disposé sur le répéteur 104 du bâtiment 106 en étant apte à recevoir un signal de calibration en provenance du satellite 18 suivant une liaison descendante aller 190 et à envoyer le résultat des mesures au travers d'une liaison satellitaire montante de retour 192, du satellite 18, et d'une liaison satellitaire descendante de retour 194.

Un terminal de calibration distinct 166 est intégré dans chaque terminal de service 36, 40, 44, 46 en étant apte à recevoir dans de bonnes conditions de propagation les signaux de calibration suivant une liaison satellitaire descendante aller associée 196, 198, 200, 202 et à envoyer les résultats des mesures au travers d'une liaison satellitaire montante de retour 204, 206, 208, 210 associée, du satellite 18, et de la liaison satellitaire descendante de retour 194.

Les liaisons satellitaires montantes de retour 192, 204, 206, 208, 210, le satellite 18, et liaison descendante de retour 194 sont aptes également à acheminer vers la station d'accès satellite 24 la position de leur terminal de calibration associé.

Chaque terminal de calibration 162, 164, 166 comporte une antenne de réception satellitaire 212, et un moyen de mesure de puissance radioélectrique.

L'antenne de réception satellitaire 212 est configurée pour avoir un diagramme de rayonnement sensiblement omnidirectionnel sur un angle solide correspondant à l'ensemble des élévations vues en parcourant l'ensemble des couvertures des faisceaux satellitaires et fonction du type d'orbite sur laquelle évolue le satellite.

Par exemple ici, l'antenne de réception 212 d'un quelconque terminal de calibration présente de manière simple un diagramme omnidirectionnel hémisphérique.

Le moyen de mesure de puissance radioélectrique apte à mesurer la puissance d'un signal radioélectrique de liaison descendante aller satellitaire spécifique à la calibration ou la puissance d'un signal satellitaire de radiocommunication descendant aller, la résolution de la mesure de puissance étant inférieure à 1 dB et la précision de la mesure étant inférieure à 5 dB, et un moyen de retransmission des mesures recueillies par le moyen de mesure et des positions des terminaux de calibration lorsque les positions desdits terminaux de calibration ne sont pas prédéterminées.

Les moyens de réacheminement 170 des mesures comprennent les liaisons satellitaires 192, 194, 198, 204, 208, 210, la station de connexion 24, l'ossature de réseau 148, les liaisons de connexion 150, 152 et une liaison 213 connectant l'unité de traitement 172 à l'ossature de réseau 148.

Le moyen de traitement 172 est apte à recevoir aux travers de moyens de réacheminement 170 les informations de mesure de puissance associées à chaque terminal de calibration 162, 164, 166 et à déterminer à partir d'un diagramme de rayonnement satellitaire de réception au sol attendu un angle estimé de correction de dépointage commun à l'ensemble des faisceaux.

La précision de l'estimation de la correction requise dépend à la fois du nombre de total de terminaux de calibration 162, 164, 166 dans la totalité des faisceaux satellitaires 130, 132, 134 et/ou de la répartition des terminaux de calibration par faisceau satellitaire, de la précision de mesure des moyens de mesure de puissance, des diagrammes de rayonnement en émission et/ou en réception des antennes 212 des terminaux de calibration.

Le moyen de traitement 172 est apte à fournir une commande de correction des faisceaux satellitaires par une estimation locale par faisceau, un nombre suffisant de terminaux de calibration étant prévu dans chaque faisceau ou une estimation globale intégrant la totalité des terminaux de calibration dans un unique diagramme de rayonnement fusionnant plusieurs faisceaux, une estimation étant comprise dans la famille des procédés formé par la méthode des moindre carrés, et les méthodes de corrélation, par exemple la méthode dite MinMax ou par inversion de diagramme.

En variante, le moyen de traitement 172 est apte à déterminer une correction de la formation des faisceaux satellitaires.

En variante, le moyen de traitement 172 est embarqué à bord du satellite.

Le nombre de terminaux de calibration 162, 164, 166 est supérieur ou égal à 50 de sorte que la taille de la statistique est suffisante pour estimer de manière suffisamment précise la correction à apporter au diagramme de l'antenne d'émission pour maintenir la congruence entre les faisceaux satellitaires et les cellules terrestres.

De manière préférée, le nombre de terminaux de calibration est un nombre compris entre 100 et 200.

L'effet de la taille de la statistique permet de s'affranchir de l'exigence d'utilisation de stations de calibrations complexes de par leurs antennes dont les diagrammes présentent une directivité élevée et de par leurs positionnements respectifs qui doivent absolument correspondre à des intersections attendues des traces au sol des faisceaux satellitaires, ce qui conduit à des difficultés d'installation des stations en termes de relief ou de climat par exemple.

Le moyen de traitement est apte à élaborer une commande maintien de la congruence à partir d'une fonction de réponse connue a priori de l'antenne d'émission 124 et du mécanisme de correction 128.

La station de télécommande 174 est apte à envoyer la commande au satellite 18 au travers d'une liaison montante de télécommande 220.

Ici, l'antenne d'émission 124 du satellite 18 est configurée de sorte que le faisceau correspondant de chaque faisceau satellitaire 130, 132, 134 présente un angle d'ouverture caractéristique θ inférieur à 0,15 degrés.

En variante, l'angle d'ouverture caractéristique θ est inférieur à un nombre compris entre 0, 5 degrés et quelques degrés.

L'angle caractéristique θ est défini comme l'angle d'ouverture minimal pris sur l'ensemble des directions azimutales du faisceau par rapport à un plan de phase d'émission de l'antenne d'émission 124 du satellite 18.

Les différents moyens formant les moyens de maintien de la congruence 52 sont agencés de façon à ce que le dépointage d'un faisceau satellitaire quelconque Δθ est maintenu inférieur en permanence à 0,012 degrés.

De manière préférée, le dépointage d'un faisceau satellitaire quelconque Δθ est maintenu inférieur en permanence à une valeur comprise entre 0,02 et 0,05 degrés.

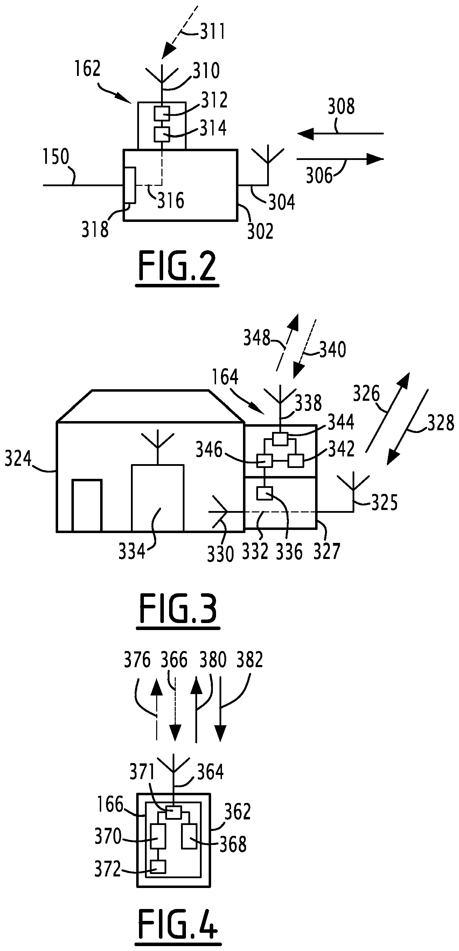

Suivant la figure 2, un terminal de calibration de premier type 162 est disposé sur une station de base désignée par la référence générique 302.

La station de base 302 comporte une antenne de radiocommunication 304 apte à émette et à recevoir des signaux de radiocommunication au travers d'une liaison montante terrestre de retour 306 et d'une liaison terrestre descendante aller 308 représentées par deux flèches en trait plein.

Le terminal de calibration de premier type 162 comprend l'antenne de réception satellitaire 212 apte à revoir un signal de calibration radioélectrique au travers d'une liaison radioélectrique descendante aller 311, un moyen de mesure de puissance radioélectrique 312 raccordé à l'antenne et un émetteur 314 apte à envoyer l'information de mesure fourni par le moyen de mesure 312 vers le moyen de traitement 172 au travers d'une liaison terrestre 316 de raccordement à la station de base 302 et d'un interface 318 d'envoi de la mesure de calibration à l'unité de traitement 152.

Suivant la figure 3, un terminal de calibration de deuxième type 164 est disposé sur un répéteur 322 d'une cellule dite FEMTO destiné à faciliter la propagation des ondes radioélectriques à l'intérieur d'un bâtiment 324 hors de portée d'une station de base.

Le répéteur 322 comprend une antenne extérieure 325 apte à communiquer avec le satellite 18 au travers des liaisons 326, 328 montante et descendante, une antenne intérieure 330 située dans le bâtiment 324 et raccordée à l'antenne extérieure 325 par une liaison transparente 332 avec amplification le cas échéant. L'antenne intérieure 330 est apte améliorer la communication avec un terminal de service de communication mobile 334 situé à l'intérieur du bâtiment 324.

Le répéteur 324 comprend également une unité de localisation 336 par exemple de type GPS (dénomination anglaise de Global Positioning System).

Le terminal de calibration de deuxième type 164 comprend l'antenne de réception satellitaire 338 apte à revoir un signal de calibration radioélectrique au travers de la liaison radioélectrique 340, un moyen de mesure de puissance radioélectrique 342 raccordé à l'antenne de réception satellitaire 338 au travers d'un duplexeur émission-réception 344, un émetteur 346 apte collecter les informations de mesure de champ radioélectrique et les informations de localisation du terminal de calibration et à retransmettre toutes les informations vers le satellite 18 au travers du duplexeur 344, de l'antenne 338 et d'une liaison radioélectrique de signalisation, montante de retour satellitaire 348.

Suivant la figure 4, un terminal de calibration de troisième type 166 est un terminal de service 362 de communication mobile qui comprend en commun l'antenne de réception satellitaire 364 apte à revoir un signal de calibration radioélectrique au travers d'une liaison radioélectrique descendante 366.

Le terminal de calibration 360 comprend un moyen de mesure de puissance radioélectrique 368 raccordé à l'antenne de réception satellitaire 364 au travers d'un duplexeur émission-réception 370, un moyen de localisation 372 et un émetteur 374 apte collecter les informations de mesure de champ radioélectrique et les informations de localisation du terminal de calibration et à retransmettre toutes les informations vers le satellite 18 au travers du duplexeur 370, de l'antenne 364 et d'une liaison radioélectrique de signalisation, montante de retour satellitaire 376.

Le moyen de localisation 372 est par exemple formé par des moyens d'extraction d'informations de positionnement déterminé par une unité de traitement terrestre utilisant par exemple un procédé de triangulation d'un réseau terrestre,
Ici, les liaisons 366, 376 de calibration, montante pour la mesure et descendante pour la signalisation, représentées en trait interrompu, sont distinctes de la liaison de service montante 380 et de la liaison de service descendante 382 représentées en trait plein.

En variante, le moyen de localisation 372 est un récepteur de positionnement global par une constellation de satellites, par exemple GPS.

En variante, las liaison montante de service 380 et la liaison montante de calibration 376 correspondant à la voie d'acheminement des informations de localisation du terminal de calibration sont identiques. La liaison descendante de service 382 et la liaison descendante de calibration 382 sont également identiques. Les moyens de mesure de puissance radioélectrique 368, le duplexeur émission-réception 370, l'émetteur 374 servant à la calibration sont les mêmes composants que ceux utilisés pour les liaisons terrestres.

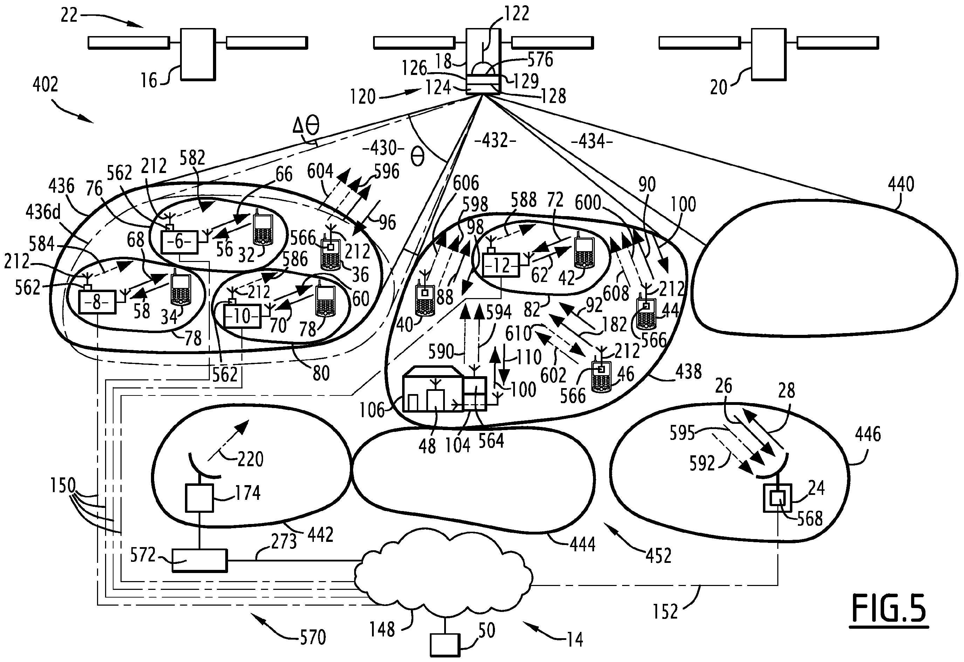

Suivant la figure 5, le système hybride de télécommunication 402 est identique en termes de service de télécommunication au système hybride de télécommunication 2 décrit à la figure 1, et en diffère seulement en ce que les moyens de maintien de congruence sont prévus ici pour maintenir la congruence entre les faisceaux satellitaires de liaison montante retour et les cellules terrestres correspondantes sur des liaisons de même sens.

Les références des stations de base, des satellites, de la station d'accès du satellite à l'infrastructure terrestre, des terminaux de service de communication, des liaisons terrestres de service descendantes aller, des liaisons terrestres de service montantes retour, des cellules terrestres, des antennes satellites et des moyens de correction de dépointage des antennes sont identiques à celles de la figure 1.

Suivant la figure 5, les faisceaux satellitaires des liaisons montantes de retour sont représentés.

L'ensemble d'antennes 120 dans sa composante réception, c"est à dire l'antenne active de réception 126, est apte à recevoir des signaux radioélectriques suivant des liaisons montantes satellitaires aller depuis les terminaux de service, les signaux radioélectriques étant répartis dans des faisceaux satellitaires de radiocommunication, trois faisceaux satellitaires 430, 432, 434 étant ici seulement représentés pour simplifier la figure 5.

Chaque faisceau satellitaire 430, 432, 434 est associé à une sous-bande de fréquences et définit par sa portée radioélectrique au sol une couverture satellitaire respective d'une cellule parapluie satellitaire 436, 438, 440 représentée en trait plein.

D'autres cellules satellitaires 442, 444, 446 sont représentées à titre d'exemple dans lesquelles aucun terminal de service n'est représenté à l'instar de la cellule satellitaire 440 pour ne pas surcharger la figure.

Suivant la figure 5 qui représente une vue instantanée des couvertures des faisceaux satellitaires de liaison montante aller du satellite 18 en visibilité, la cellule parapluie satellitaire 436 recouvre les cellules terrestres 76, 78, 80 associées respectivement aux stations de base 6, 8, 10 et le terminal de service 36 hors de portée d'une quelconque station de base.

La cellule parapluie satellitaire 438 recouvre la cellule terrestre 82, les terminaux de service 40, 44, 46, hors de portée d'une quelconque station de base et la cellule de type FEMTO 106 contenant le répéteur 104 et le terminal de service 48.

Les moyens d'affectation 50 de ressources de transmission sont connectés à l'ossature de réseau 148 et sont aptes à affecter des ressources de transmissions à chaque station de base 6, 8, 10, 12, respectivement à chaque faisceau satellitaire 430, 432, 434.

Chaque ressource de transmission est définie par une sous-bande de fréquences et/ou une tranche de temps et/ou un code, affectée aux stations de base, respectivement aux faisceaux satellitaires, 430, 432, 434, les sous-bandes étant déterminées par rapport à une première bande de fréquences allouée à l'ensemble des stations de base 6, 8, 10, 12 et à une deuxième bande de fréquences allouée aux faisceaux satellitaires 430, 432, 434.

Ici, la même bande de fréquences est partagée par les stations de base 6, 8, 10, 12 et le satellite 18.

En variante, la première bande allouée de fréquences terrestres et la deuxième bande allouée de fréquences satellitaires sont identiques, partiellement identiques ou disjointes,

Les contours des cellules satellitaires 436, 438, 440 ont été déterminés de sorte que les stations de base 6, 8, 10, 12 soient réparties de manière discernable par cellule satellitaire de liaison montante selon une fonction de répartition invariante dans le temps.

La couverture d'une cellule satellitaire est dite congruente pour les liaisons montantes retour à un ensemble prédéterminé de couvertures de cellules terrestres de liaisons de même sens lorsque ledit ensemble prédéterminé de couvertures est inclus entièrement dans la couverture satellitaire, c'est-à-dire les frontières des cellules terrestres réparties dans la cellule satellitaire suivant la fonction de répartition prédéterminée sont entourées par la frontière de la cellule satellitaire correspondante.

Les moyens de maintien 452 de la congruence sont aptes à maintenir la couverture de chaque cellule satellitaire de liaison montante retour par rapport aux couvertures des cellules terrestres de liaisons de même sens et associés aux stations de base contenues dans ladite cellule satellitaire.

Les moyens de maintien 452 de la congruence en liaison de service montante retour comprennent des terminaux de calibration 562, 564, 566 distribués dans les cellules satellitaires 436, 438, 440, des moyens de mesure 568 des signaux radioélectriques reçus par le satellite 18 en provenance des terminaux de calibration 562, 564, 566 et, des moyens 570 de réacheminent des mesures fournies par les moyens de mesure 568 à un moyen de traitement 572, le moyen de traitement 572 des mesures de calibrations fournies par les moyens de mesure 568 pour élaborer des commandes de corrections, la station satellitaire de télécommande 174 connectée au moyen de traitement 572 formant le moyen de réacheminement des commandes de correction au satellite 18, un mécanisme de correction 576 du diagramme de rayonnement en réception de l'antenne de réception 126 du satellite 18, ici le mécanisme d'inclinaison 129 du support de l'antenne active de réception 126.

Les terminaux de calibration 562, 564, 566 peuvent être classés en trois types de terminaux, les terminaux de premier type 562 disposés chacun sur une station de base différente, les terminaux de deuxième type disposés sur un répéteur d'une cellule de type FEMTO, et les terminaux de troisième type intégrés dans des terminaux de service fonctionnant en mode satellite.

Un terminal de premier type 562 est disposé ici sur chaque station de base 6, 8, 10, 12 en étant apte à émettre dans de bonnes conditions de propagation des signaux de calibration, calibrés en puissance et dans lesquels est codé un identifiant de la station de base 6, 8, 10, 12 à laquelle est associée le terminal émetteur 562 suivant une liaison satellitaire montante retour associée 582, 584, 586, 588.

Un terminal de deuxième type 564 est disposé sur le répéteur 104 du bâtiment 106 en étant apte à émettre un signal de calibration vers le satellite 18 suivant une liaison montante retour 590, le signal de calibration étant destiné à être réacheminé de manière transparente par le satellite 18 vers la station d'accès 24 au travers d'une liaison satellitaire descendante de retour 592.

Le terminal de deuxième type 564 est également apte à émettre un signal de localisation du terminal vers la station d'accès 24 au travers d'une liaison de signalisation montante 594, du satellite 18 et d'une liaison de signalisation descendante 595.

Un terminal de calibration distinct 566 est intégré dans chaque terminal de service 36, 40, 44, 46 en étant apte à émettre dans de bonnes conditions de propagation des signaux de calibration suivant une liaison satellitaire montante retour associée 596, 598, 600, 602, les signaux de calibration étant destinés à être réacheminer de manière transparente par le satellite 18 vers la station d'accès 24 au travers de la liaison satellitaire descendante de retour 592, et dans lesquels est codé l'identifiant respectif du terminal émetteur 566 associé.

Chaque terminal de calibration 566 associé respectivement à un terminal de service 36, 40, 44, 46 est apte également à émettre un signal de localisation du terminal vers la station d'accès 24 au travers d'une liaison de signalisation montante associé 604, 606, 608, 610, du satellite 18 et de la liaison de signalisation descendante 595.

Chaque terminal de calibration 562, 564, 566 comporte une antenne d'émission satellitaire, ici supposée être la même que l'antenne réception 212 des terminaux de calibration décrits à la figure 1, et un moyen de génération d'un signal radioélectrique dont la puissance d'émission est connue avec précision.

A l'instar de l'antenne de réception de la figure 1, l'antenne d'émission 212 est configuré pour avoir un diagramme de rayonnement sensiblement omnidirectionnel sur un angle solide correspondant à l'ensemble des élévations vues en parcourant l'ensemble des couvertures des faisceaux satellitaires et fonction du type d'orbite sur laquelle évolue le satellite.

Par exemple ici, l'antenne d'émission 212 d'un quelconque terminal de calibration présente de manière simple un diagramme omnidirectionnel hémisphérique.

Le moyen de mesure 568 des signaux de calibration est ici disposé dans la station d'accès 24, étant supposé que les caractéristiques d'atténuation des liaisons satellitaires montantes 582, 584, 586, 588, 590, 596, 598, 600, 602 et de la liaison descendante 592 soient connues avec précision ainsi que la caractéristique d'amplification du satellite 18 fonctionnant selon un répéteur transparent.

Les moyens de réacheminement 570 des mesures comprennent la station de connexion 24, l'ossature de réseau 148 et les liaisons de connexion 152, 154.

En variante, le moyen de mesure 568 est disposé à bord du satellite 18 et les moyens de réacheminent comprennent alors en plus la liaison satellitaire descendante 592.

Le moyen de traitement 572 est apte à recevoir aux travers de moyens de réacheminement 570 les informations de mesure de puissance associées à chaque terminal de calibration 562, 564, 566 au niveau du satellite 18 et à déterminer à partir d'un diagramme de rayonnement satellitaire de réception en liaison montante vu au sol et attendu un angle de correction de dépointage commun à l'ensemble des faisceaux.

En variante, le moyen de traitement 572 est apte à déterminer une correction de la formation des faisceaux satellitaires.

En variante, le moyen de traitement 572 est embarqué à bord du satellite.

Le nombre de terminaux de calibration 562, 564, 566 est supérieur ou égal à 50 de sorte que la taille de la statistique est suffisante pour estimer de manière suffisamment précise la correction à apporter au diagramme de l'antenne de réception pour maintenir la congruence entre les faisceaux satellitaires de liaison montante et les cellules terrestres de liaison terrestre montante.

De manière préférée, le nombre de terminaux de calibration est un nombre compris entre 100 et 200.

L'effet de la taille de la statistique permet de s'affranchir de l'exigence d'utilisation de stations de calibrations complexes de par leurs antennes dont les diagrammes présentent une directivité élevée et de par leurs positionnements respectifs qui doivent absolument correspondre à des intersections attendues des traces au sol des faisceaux satellitaires de réception, ce qui conduit à des difficultés d'installation des stations en termes de relief ou de climat par exemple.

Le moyen de traitement 572 est apte à élaborer une commande maintien de la congruence à partir d'une fonction de réponse du mécanisme de correction connue a priori.

La station de télécommande 174 à l'instar ce celle de la figure 1 est apte à envoyer la commande au satellite 18 au travers de la liaison montante de télécommande 220.

Ici, l'antenne de réception 126 du satellite est configurée de sorte que le faisceau correspondant de chaque cellule satellitaire présente un angle d'ouverture caractéristique θ inférieur à 0,15 degrés.

En variante, l'angle d'ouverture caractéristique θ est inférieur à un nombre compris entre 0, 5 degrés et quelques degrés.

L'angle caractéristique θ est défini comme l'angle d'ouverture minimal pris sur l'ensemble des directions azimutales du faisceau par rapport à un plan de phase de réception de l'antenne de réception 126 du satellite 18.

Les différents moyens formant les moyens de maintien de la congruence 452 sont agencés de façon à ce que le dépointage d'un faisceau satellitaire quelconque est maintenu inférieur en permanence à une différence d'angle Δθ de 0,012 degrés.

De manière préférée, le dépointage d'un faisceau satellitaire quelconque Δθ est maintenu inférieur en permanence à une valeur comprise entre 0,02 et 0,05 degrés.

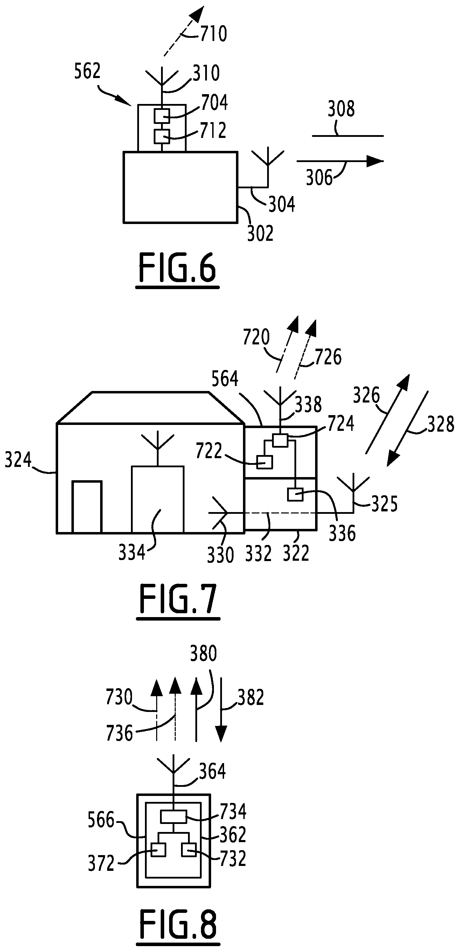

Suivant la figure 6, un terminal de calibration de premier type 562 est disposé sur une station de base 302 identique celle décrite à la figure 2.

A l'instar de la figure 2, la station de base 302 comporte une antenne de radiocommunication 304 apte à émettre et à recevoir des signaux de radiocommunication au travers d'une liaison montante terrestre de retour 306 et d'une liaison terrestre descendante aller 308 représentées par deux flèches en trait plein.

Le terminal de calibration de premier type 562 comprend l'antenne d'émission satellitaire 310, identique à l'antenne de réception de la figure 2, apte à émettre un signal de calibration radioélectrique au travers de la liaison radioélectrique 710, un moyen de génération d'un signal de calibration 712 dont la puissance est connue avec précision, un modulateur 714 d'encodage d'un identifiant de la station de base 302 sur laquelle est disposé le terminal de calibration.

Suivant la figure 7, un terminal de calibration de deuxième type 564 est à l'instar de la figure 3 disposé sur le répéteur 322 de la cellule dite FEMTO destiné à améliorer la propagation des ondes radioélectriques à l'intérieur du bâtiment 324 hors de portée d'une station de base.

Le répéteur 322 comprend les mêmes composants 325, 330, 332, 336 que ceux décrits à la figure 3 et les mêmes liaisons 326, 328 montante et descendante.

Le terminal de calibration de deuxième type 564 comprend l'antenne de d'émission satellitaire 338, identique à l'antenne de réception de la figure 3, apte à émettre un signal de calibration radioélectrique au travers d'une liaison radioélectrique 720, un moyen de génération d'un signal de calibration 722 dont la puissance est connue avec précision, un duplexeur/modulateur de sortie 724, connecté en une première entrée au moyen de localisation 336 et en une deuxième entrée au moyen de génération 722, apte à moduler les informations de localisation sur une porteuse caractéristique d'une liaison montante de signalisation 726 distincte de la porteuse associée au signal de calibration, et à duplexer en fréquence le signal de calibration et le signal de localisation.

Suivant la figure 8, un terminal de calibration de troisième type 566 est un terminal de service 362 de communication mobile comprenant en commun l'antenne d'émission satellitaire 364, identique à l'antenne de réception de la figure 4 et apte à émettre un signal de calibration radioélectrique au travers d'une liaison radioélectrique montante 730.

Le terminal de calibration de troisième type 566 comprend également un moyen de génération 732 d'un signal de calibration dont la puissance est connue avec précision, un duplexeur/modulateur de sortie 734, connecté en une première entrée au moyen de localisation 336 identique à celui de la figure 4, et en une deuxième entrée au moyen de génération 732, apte à moduler les informations de localisation sur une porteuse caractéristique d'une liaison montante de signalisation 736 distincte de la porteuse associée au signal de calibration, et à duplexer en fréquence le signal de calibration et le signal de localisation modulée.

Ici, les liaisons 730, 736 montantes de calibration et de signalisation représentées en trait interrompu sont distinctes entre elles et distinctes de la liaison de service montante 380 représentée en trait plein.

En variante, les liaisons 730, 736 montantes de calibration et de signalisation sont communes, par exemple en modulant les informations de localisation sur le signal de calibration formant porteuse.

En variante, les liaisons 730, 736 montantes de calibration et de signalisation et la liaison de service montante 380 sont communes, en utilisant le signal ou une portion de celui-ci comme signal de calibration et le signal de service comme signal de signalisation.

Le moyen de génération 732 du signal de calibration peut être un moyen classique implémenté pour une fonction de contrôle de puissance déjà existante.

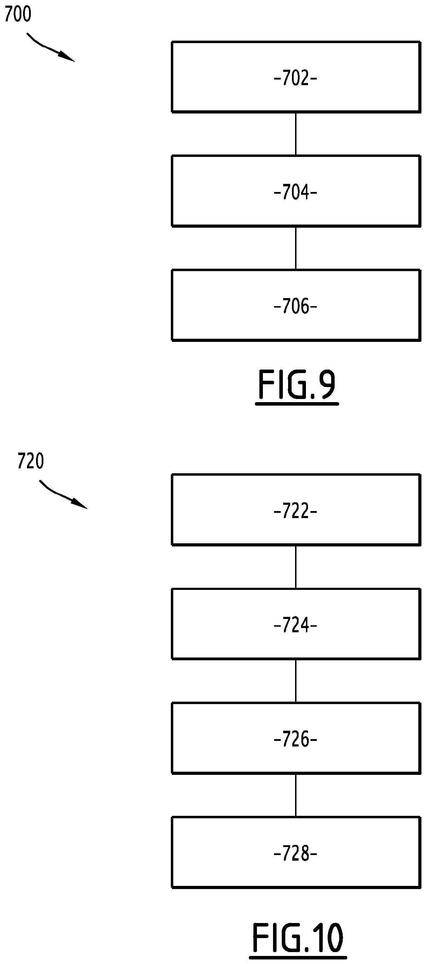

Suivant la figure 9, un procédé de maintien 700 de la congruence entre des couvertures de cellules terrestres suivant des liaisons de même sens d'un réseau de radiocommunication cellulaire et des couvertures de cellules satellitaires, correspondant à des liaisons de même sens que les liaisons des cellules terrestres et servant de cellules parapluie, est mis en oeuvre dans un système hybride de télécommunication tel que décrit dans les figures 1 et 5, et comprend un succession d'étapes 702, 704, 706.

Dans la première étape 702, des puissances de signaux radioélectriques de calibration sont mesurées soit par des terminaux de calibration fonctionnant en récepteur en liaison descendante aller, soit par des moyens de mesure situés à bord du satellite 18 ou d'une station d'accès 24 en liaison montante retour.

Les signaux radioélectriques de calibration sont émis soit par le satellite en liaison descendante aller, soit par les terminaux de calibration fonctionnant en émetteur en liaison montante retour.

Puis au cours la même étape 702, les mesures sont réacheminées au moyen de traitement 172, 572,
Dans l'étape suivante 704, le moyen de traitement 172, 571 estime les corrections requises en termes d'angle de dépointage sur la structure de l'antenne globale de l'antenne, ou de coefficients amplitude/déphasage des éléments rayonnants de manière à assurer la congruence de chaque faisceau satellitaire.

Dans l'étape 704, une estimation globale est mise en oeuvre par intégration de la totalité des terminaux de calibration dans un unique diagramme de rayonnement fusionnant plusieurs faisceaux.

L'estimation est effectuée selon une méthode prise parmi la méthode des moindres carrés, les méthodes de corrélation.

La précision de l'estimation de la correction requise dépend à la fois du nombre de total de terminaux de calibration dans la totalité des faisceaux satellitaires et/ou de la répartition des terminaux de calibration par faisceau satellitaire, de la précision de mesure des moyens de mesure de puissance, des diagrammes de rayonnement en émission et/ou en réception des antennes des terminaux de calibration, et également du niveau de congruence souhaités entre faisceaux satellitaires ainsi que de la stabilité du pointage souhaitée.

Dans l'étape 706, la correction estimée à l'étape 704 est appliquée au mécanisme de correction 128, 129 des faisceaux satellitaires.

Suivant la figure 10, une variante du procédé décrit à la figure 9 comprend une succession d'étapes 722, 724, 726, 728.

La première étape 722 est similaire à l'étape 702 et en diffère en ce qu'un nombre suffisant de terminaux de calibration a été prévu dan chaque faisceau satellitaire de manière a effectuer un traitement par faisceau.

Dans l'étape 724 les données de mesure sont classées par faisceau.

Dans la même étape 724 pour chaque faisceau, le moyen de traitement estime les corrections associées à un faisceau requises en termes d'angle de dépointage sur la structure de l'antenne globale de l'antenne ou des structures locales de l'antenne, ou de coefficients amplitude/déphasage des éléments rayonnants de manière à assurer la congruence pour le faisceau analysé.

Puis dans l'étape suivante 726, l'unité de traitement synthétise les corrections estimées pour chaque faisceau à l'étape 724 en une correction réalisant le meilleur compromis global de le congruence de l'ensemble des faisceaux.

Dans l'étape 728, la correction synthétisée dans l'étape 726 est appliquée au mécanisme de correction 128, 129 des faisceaux satellitaires.

Il en résulte le maintien de la congruence entre les faisceaux satellitaires et les cellules terrestres pour des liaisons de même sens.

L'invention décrite ci-dessus dans le cadre d'un système hybride est également applicable à un système satellitaire non hybride, c'est-à-dire un système satellitaire seul avec un grand nombre de terminaux de service et des cellules satellitaires mais sans réseau de cellules terrestres.

Un système satellitaire de radiocommunication non hybride comprend au moins un satellite de communication, relié à une infrastructure terrestre par au moins une station d'accès au travers d'une liaison bidirectionnelle de raccordement, et apte à émettre suivant une liaison descendante satellitaire aller et/ou à recevoir suivant une liaison montante satellitaire retour des signaux de radiocommunication de service répartis dans des faisceaux satellitaires de radiocommunication, les faisceaux satellitaires étant associés chacun à une sous-bande bande de fréquence et définissant chacun par sa portée radioélectrique au sol une couverture satellitaire d'une cellule satellitaire.

Le système satellitaire de radiocommunication non hybride comprend également un ensemble de terminaux de service de communication aptes à émettre et/ou à recevoir les signaux de radiocommunication, et répartis dans les cellules satellitaires, des moyens d'affectation aux faisceaux satellitaires de ressources de transmission, chaque ressource étant définie par une sous-bande de fréquences et/ou une tranche de temps et/ou un code, les sous-bandes étant déterminées par rapport à une bande de fréquences allouée aux faisceaux satellitaires.

Le système satellitaire de radiocommunication non hybride comprend également des moyens de maintien en permanence de la congruence de la couverture de chaque cellule satellitaire par rapport à un gabarit de couverture minimale associée désirée d'une cellule satellitaire.

Dans un système satellitaire non hybride, la couverture d'une cellule satellitaire est congruente par rapport à un gabarit de couverture minimale associée désirée lorsque le gabarit de couverture minimale associée désirée est inclus totalement dans la couverture satellitaire.

Suivant des modes particuliers, le faisceau satellitaire correspondant de chaque cellule satellitaire présente un angle d'ouverture caractéristique θ défini comme l'angle d'ouverture minimal pris sur l'ensemble des directions azimutales du faisceau satellitaire par rapport à un plan de phase d'émission ou de réception du satellite.

L'angle d'ouverture minimal θ du faisceau correspondant de chaque cellule satellitaire est inférieur à une valeur d'angle comprise entre 0,5 degrés et quelques degrés et les moyens de maintien de la congruence sont aptes à maintenir un dépointage Δθ du faisceau satellitaire inférieur en permanence à 0,05 degrés.

Les orbites des satellites du système non hybride sont les mêmes que celles utilisées pour un système hybride.

A l'instar d'un système hybride, les moyens de maintien de la congruence comprennent des terminaux de calibration distribués dans les cellules satellitaires et comportant chacun une antenne de réception satellitaire, l'antenne de réception satellitaire ayant un diagramme de rayonnement sensiblement omnidirectionnel sur un angle solide, correspondant à l'ensemble des élévations vues en parcourant l'ensemble des couvertures satellitaires et fonction du type d'orbite sur laquelle évolue le satellite.

Chaque terminal de calibration comprend un moyen de mesure de puissance radioélectrique apte à mesurer la puissance d'un signal radioélectrique de liaison descendante spécifique à la calibration ou la puissance d'un signal de radiocommunication, la résolution de la mesure de puissance étant inférieure à 1 dB et la précision de la mesure étant inférieure à 5 dB, et un moyen de retransmission des mesures recueillies par le moyen de mesure et des positions des terminaux de calibration lorsqu'elles ne sont pas prédéterminées.

Les moyens de maintenance de la congruence comprennent des terminaux de calibration distribués dans les cellules satellitaires et comportant chacun une antenne d'émission satellitaire, l'antenne d'émission satellitaire ayant un diagramme de rayonnement sensiblement omnidirectionnel sur un angle solide, correspondant à l'ensemble des élévations vues en parcourant l'ensemble des couvertures satellitaires et fonction du type d'orbite sur laquelle évolue le satellite, chaque terminal de calibration comportant un moyen d'émission d'un signal radioélectrique sur une liaison satellitaire montante spécifique à la calibration ou de radiocommunication calibré en puissance, et un moyen de mesure situé à bord du satellite ou d'une station d'accès apte à mesurer la puissance du signal radioélectrique de calibration de chaque terminal de calibration sur la liaison montante retour satellitaire correspondante, la résolution de la mesure de puissance étant inférieure à 1 dB et la précision de la mesure étant inférieure à 5 dB, et un moyen de retransmission des mesures recueillies par le moyen de mesure et des positions des terminaux de calibration lorsqu'elles ne sont pas prédéterminées.

Dans le système non hybride, le nombre de terminaux de calibration est supérieur ou égal à 50.

Les terminaux de calibration sont disposés au niveau d'un certain nombre de terminaux de service de communication fixes dont la localisation est connue avec précision.

Un certain nombre de terminaux de calibration sont disposés sur des répéteurs de type FEMTO destinés à améliorer la propagation des ondes à l'intérieur de bâtiments, chaque répéteur étant pourvue d'une unité de localisation, le terminal de calibration étant apte à émettre sa localisation par des informations de localisation fournies par l'unité de localisation.

Les terminaux de calibration sont des terminaux de service de communication mobiles qui comprennent un moyen de localisation pris parmi l'ensemble formés par les récepteurs de positionnement global par une constellation de satellites et les moyens d'extraction d'informations de positionnement déterminé par un réseau terrestre mobile, le terminal de calibration étant apte à émettre sa localisation par des informations de localisation fournies par le moyen de localisation.

Le système satellitaire non hybride de communication comprend un moyen de traitement apte à recevoir les informations de mesure de puissance associées à chaque terminal de calibration et à déterminer à partir d'un diagramme de rayonnement au sol attendu un angle de correction de dépointage commun à l'ensemble des faisceaux ou une correction de la formation des faisceaux satellitaires, le moyen de traitement étant raccordé aux moyens de mesures par une ou des liaisons de communication comprise parmi les liaisons d'un réseau sol de type Internet, les liaisons d'un réseau terrestre cellulaire, des liaisons satellite.

La précision de l'estimation de la correction requise dépend à la fois du nombre de total de terminaux de calibration dans la totalité des faisceaux satellitaires et/ou de la répartition des terminaux de calibration par faisceau satellitaire, de la précision de mesure des moyens de mesure de puissance, des diagrammes de rayonnement en émission et/ou en réception des antennes des terminaux de calibration.

Le moyen de traitement est apte à corriger les faisceaux satellitaires par une estimation locale par faisceau, un nombre suffisant de terminaux de calibration étant prévu dans chaque faisceau ou une estimation globale intégrant la totalité des terminaux de calibration dans un unique diagramme de rayonnement fusionnant plusieurs faisceaux, une estimation étant comprise dans la famille des procédés formé par la méthode des moindre carrés, les méthodes de corrélation.

Un procédé de maintien de la congruence entre des couvertures de cellules satellitaires et des couvertures désirées créées par un satellite dans un système satellitaire non hybride de télécommunication tel que décrit ci-dessus comprend les étapes consistant en ce que :
des puissances de signaux radioélectriques de calibration sont mesurées soit par des terminaux de calibration fonctionnant en récepteur en liaison descendante aller, soit par des moyens de mesure situés à bord d'un satellite ou d'une station d'accès en liaison montante retour ou en liaison descendante retour, et réacheminées à un moyen de traitement,
le moyen de traitement estime une correction requise en termes d'angle de dépointage sur une structure porteuse d'antenne satellite, ou de coefficients amplitude/déphasage d'éléments rayonnants, à partir des mesures de puissance recueillies à l'étape de mesure, des informations de localisation des terminaux, et des couvertures désirées invariantes dans le temps, la condition de congruence étant satisfaite pour chaque cellule satellitaire lorsque la couverture de chaque cellule satellitaire contient la couverture désirée associée,
la correction estimée à l'étape d'estimation est appliquée au mécanisme de correction des faisceaux satellitaires.

## Revendications

1. Système hybride de radiocommunication cellulaire comprenant
- un réseau de stations de base terrestres (6, 8, 10, 12), interconnectées entre elles et reliées à une infrastructure terrestre (14), aptes chacune, dans une sous-bande de fréquences associée, à émettre suivant une liaison descendante aller (56, 58, 60, 62) et/ou à recevoir suivant une liaison montante retour (66, 68, 70, 72) des signaux de radiocommunication de service et définissant chacune par sa portée radioélectrique une couverture montante et/ou descendante d'une cellule terrestre de radiocommunication (76, 78, 80, 82),
- au moins un satellite de communication (16, 18, 20), relié à l'infrastructure terrestre (14) par au moins une station d'accès (24) au travers d'une liaison bidirectionnelle de raccordement (26, 28), et apte à émettre suivant une liaison descendante satellitaire aller (96, 98, 100, 102, 110) et/ou à recevoir suivant une liaison montante satellitaire retour (86, 88, 90, 92, 100) des signaux de radiocommunication de service répartis dans des faisceaux satellitaires de radiocommunication (130, 132, 134 ; 430, 432, 434), les faisceaux satellitaires (130, 132, 134, 430, 432, 434) étant associés chacun à une bande de fréquence et définissant chacun par sa portée radioélectrique au sol une couverture satellitaire montante et/ou descendante d'une cellule parapluie satellitaire (136, 138, 140 ; 436, 438, 440),
- un ensemble de terminaux de service de communication (32, 34, 36, 38, 40, 42, 44, 46, 48) aptes à émettre et/ou à recevoir les signaux de radiocommunication, et répartis dans les cellules terrestres (76, 78, 80, 82) et les cellules satellitaires (136, 138, 140 ; 436, 438, 440),
- des moyens d'affectation (50) de ressources de transmission, chacune étant définie par une sous-bande de fréquences et/ou une tranche de temps et/ou un code, aux stations de base (6, 8, 10, 12), respectivement aux faisceaux satellitaires (130, 132, 134, 430, 432, 434), les sous-bandes étant déterminées par rapport à une première bande de fréquences allouée à l'ensemble des stations de base (6, 8, 10, 12) et à une deuxième bande de fréquences allouée aux faisceaux satellitaires (130, 132, 134, 430, 432, 434),
**caractérisé en ce que**
les stations de base (6, 8, 10, 12) sont réparties de manière discernable par cellule satellitaire (136, 138, 140 ; 436, 438, 440) selon une fonction de répartition invariante dans le temps,
et le système comprend des moyens de maintien (52 ; 452) de la congruence, en permanence et suivant un même sens de liaison, de la couverture de chaque cellule satellitaire (136, 138, 140 ; 436, 438, 440) par rapport aux couvertures des cellules terrestres (76, 78, 80, 82) associées aux stations de base (6, 8, 10, 12) contenues dans ladite cellule satellitaire, la couverture d'une cellule satellitaire (136 ; 436) étant congruente à un ensemble prédéterminé de couvertures terrestres lorsque ledit ensemble prédéterminé de couvertures est inclus totalement dans la couverture satellitaire.

2. Système hybride de communication selon la revendication 1, **caractérisé en ce que** la même bande de fréquences est partagée par les stations de base (6, 8, 10, 12) et le satellite (18).

3. Système hybride de communication selon la revendication 1, **caractérisé en ce que** le faisceau satellitaire (130, 132, 134, 430, 432, 434) correspondant de chaque cellule satellitaire (136, 138, 140 ; 436, 438, 440) présente un angle d'ouverture caractéristique θ défini comme l'angle d'ouverture minimal pris sur l'ensemble des directions azimutales du faisceau par rapport à un plan de phase d'émission ou de réception du satellite, et **en ce que** l'angle d'ouverture minimal θ du faisceau correspondant de chaque cellule satellitaire est inférieur à une valeur d'angle comprise entre 0,5 degrés et quelques degrés et **en ce que** les moyens de maintenance de la congruence (52 ; 452) sont aptes à maintenir un dépointage Δθ du faisceau satellitaire inférieur en permanence à 0,05 degrés.

4. Système hybride de communication selon l'une quelconque des revendications 1 à 3, **caractérisé en ce que** l'orbite du satellite (18) est comprise dans la famille des orbites géostationnaires (GEO), des orbites fortement elliptiques (HEO) notamment de type Sycomores, Toundra ou Molnya et des orbites géosynchrones inclinées (IGSO).

5. Système hybride de communication selon l'une des revendications 1 à 4, **caractérisé en ce que** les moyens de maintien de la congruence (52) comprennent des terminaux de calibration (162, 164, 166), distribués dans les cellules satellitaires (136, 138, 140) et comportant chacun une antenne de réception satellitaire (212), l'antenne de réception satellitaire (212) ayant un diagramme de rayonnement sensiblement omnidirectionnel sur un angle solide, correspondant à l'ensemble des élévations vues en parcourant l'ensemble des couvertures satellitaires et fonction du type d'orbite sur laquelle évolue le satellite (18).

6. Système hybride de communication selon la revendication 5, **caractérisé en ce que** chaque terminal de calibration (162, 164, 166) comprend un moyen de mesure de puissance radioélectrique (312, 342, 368) apte à mesurer la puissance d'un signal radioélectrique de liaison descendante (311, 340, 366) spécifique à la calibration ou la puissance d'un signal de radiocommunication, la résolution de la mesure de puissance étant inférieure à 1 dB et la précision de la mesure étant inférieure à 5 dB, et un moyen de retransmission des mesures (318, 346, 370) recueillies par le moyen de mesure (312, 342, 368) et des positions des terminaux de calibration lorsqu'elles ne sont pas prédéterminées.

7. Système hybride de communication selon l'une des revendications 1 à 4, **caractérisé en ce que** les moyens de maintenance de la congruence (452) comprennent
des terminaux de calibration (562, 564, 566), distribués dans les cellules satellitaires (436, 438, 440) et comportant chacun une antenne d'émission satellitaire (310, 338, 364), l'antenne d'émission satellitaire (310, 338, 364) ayant un diagramme de rayonnement sensiblement omnidirectionnel sur un angle solide, correspondant à l'ensemble des élévations vues en parcourant l'ensemble des couvertures satellitaires et fonction du type d'orbite sur laquelle évolue le satellite (18), chaque terminal de calibration (562, 564, 566), comportant un moyen d'émission (712, 722, 732) d'un signal radioélectrique sur une liaison satellitaire montante (710, 720, 730) spécifique à la calibration ou de radiocommunication calibré en puissance,
et un moyen de mesure (568) situé à bord du satellite (18) ou d'une station d'accès (24) apte à mesurer la puissance du signal radioélectrique de calibration de chaque terminal de calibration sur la liaison montante retour satellitaire correspondante, la résolution de la mesure de puissance étant inférieure à 1 dB et la précision de la mesure étant inférieure à 5 dB, et un moyen de retransmission des mesures recueillies par le moyen de mesure et des positions des terminaux de calibration lorsqu'elles ne sont pas prédéterminées.

8. Système hybride de communication selon l'une quelconque des revendications 5 à 7, **caractérisé en ce que** le nombre de terminaux de calibration (162, 164, 166 ; 562, 564, 566) est supérieur ou égal à 50.

9. Système hybride de communication selon l'une quelconque des revendications 5 à 7, **caractérisé en ce que** des terminaux de calibration (162, 164, 166 ; 562, 564, 566), sont disposés au niveau d'un certain nombre de stations de base (6, 8, 10, 12) dont la localisation est connue avec précision..

10. Système hybride de communication selon l'une quelconque des revendications 5 à 8, **caractérisé en ce qu'**un certain nombre de terminaux de calibration sont disposés sur des répéteurs (104) FEMTO destinés à améliorer la propagation des ondes à l'intérieur de bâtiments (106), chaque répéteur (104) étant pourvue d'une unité de localisation (336), le terminal de calibration (564) étant apte à émettre sa localisation par des informations de localisation fournies par l'unité de localisation (536).

11. Système hybride de communication selon l'une quelconque des revendications 5 à 10, **caractérisé en ce que** des terminaux de calibration (664, 566) sont des terminaux de service de communication mobiles qui comprennent un moyen de localisation (326, 372) pris parmi l'ensemble formés par les récepteurs de positionnement global par une constellation de satellites et les moyens d'extraction d'informations de positionnement déterminé par un réseau terrestre mobile, le terminal de calibration étant apte à émettre sa localisation par des informations de localisation fournies par le moyen de localisation (326, 372).

12. Système hybride de communication selon l'une quelconque des revendications 1 à 10, **caractérisé en ce qu'**il comprend un moyen de traitement (172 ; 572) apte à recevoir les informations de mesure de puissance associées à chaque terminal de calibration et à déterminer à partir d'un diagramme de rayonnement au sol attendu un angle de correction de dépointage commun à l'ensemble des faisceaux ou une correction de la formation des faisceaux satellitaires, le moyen de traitement (172 ; 572) étant raccordé au moyen (568) ou aux moyens de mesures (312, 342, 368) par une ou des liaisons de communication comprise parmi les liaisons d'un réseau sol de type Internet, les liaisons d'un réseau terrestre cellulaire, des liaisons satellite.

13. Système hybride de communication selon la revendication 12, **caractérisé en ce que** la précision de l'estimation de la correction requise dépend à la fois
du nombre de total de terminaux de calibration (162, 164, 166 ; 562, 564, 566) dans la totalité des faisceaux satellitaires (130, 132, 134 ; 430, 432, 434) et/ou de la répartition des terminaux de calibration par faisceau satellitaire, de la précision de mesure des moyens de mesure de puissance, des diagrammes de rayonnement en émission et/ou en réception des antennes (212) des terminaux de calibration.

14. Système hybride de communication selon l'une quelconque des revendications 12 à 13, **caractérisé en ce que** le moyen de traitement (52 ; 452) est apte à corriger les faisceaux satellitaires par une estimation locale par faisceau, un nombre suffisant de terminaux de calibration étant prévu dans chaque faisceau ou une estimation globale intégrant la totalité des terminaux de calibration dans un unique diagramme de rayonnement fusionnant plusieurs faisceaux, une estimation étant comprise dans la famille des procédés formé par la méthode des moindre carrés, les méthodes de corrélation.

15. Procédé de traitement de maintien de la congruence entre des couvertures de cellules terrestres de radiocommunication et des couvertures de cellules satellitaires servant de parapluie créées par au moins un satellite (18) dans un système hybride de télécommunication conforme à l'une quelconque des revendications 1 à 14, comprenant les étapes consistant en ce que :
des puissances de signaux radioélectriques de calibration sont mesurées (702) soit par des terminaux de calibration fonctionnant en récepteur en liaison descendante aller, soit par des moyens de mesure situés à bord d'un satellite (18) ou d'une station d'accès (24) en liaison montante retour, et réacheminées à un moyen de traitement (172, 572),
le moyen de traitement (172, 572) estime (704) une correction requise en termes d'angle de dépointage sur une structure porteuse d'antenne satellite, ou de coefficients amplitude/déphasage d'éléments rayonnants, à partir des mesures de puissance recueillies à l'étape (704) et de la fonction de répartition invariante dans le temps des stations de base (6, 8, 10, 12) dans les cellules satellitaires (136, 138, 140 ; 436, 438, 440), la condition de congruence étant satisfaite pour chaque cellule satellitaire lorsque la couverture de chaque cellule satellitaire contient l'ensemble des couvertures des cellules terrestres associées aux stations de base déterminées par la fonction de répartition comme étant comprise dans la cellule satellitaire,
la correction estimée à l'étape (704) est appliquée (706) au mécanisme de correction (128, 129) des faisceaux satellitaires.

## Patentansprüche

1. Hybrides zellulares Funkkommunikationssystem, umfassend
- ein Netz aus terrestrischen Basisstationen (6, 8, 10, 12), die untereinander verbunden und an eine terrestrische Infrastruktur (14) angebunden sind, die jede in der Lage sind, in einem zugeordneten Teilfrequenzband Funkkommunikationsdienstsignale einer Downlink-Hinverbindung (56, 58, 60, 62) folgend zu senden und/oder einer Uplink-Rückverbindung (66, 68, 70, 72) folgend zu empfangen, und die jede über ihre Funkreichweite eine Uplink- und/oder Downlink-Abdeckung einer terrestrischen Funkkommunikationszelle (76, 78, 80, 82) definieren,
- mindestens einen Kommunikationssatelliten (16, 18, 20), der über mindestens eine Zugangsstation (24) über eine bidirektionale Anschlussverbindung (26, 28) an die terrestrische Infrastruktur (14) angebunden und in der Lage ist, Funkkommunikationsdienstsignale, die in Funkkommunikations-Satellitenstrahlen (130, 132, 134; 430, 432, 434) verteilt sind, einer Downlink-Satelliten-Hinverbindung (96, 98, 100, 102, 110) folgend zu senden und/oder einer Uplink-Satelliten-Rückverbindung (86, 88, 90, 92, 100) folgend zu empfangen, wobei die Satellitenstrahlen (130, 132, 134, 430, 432, 434) jeder einem Frequenzband zugeordnet sind und jeder über seine Funkreichweite am Boden eine Uplink- und/oder Downlink-Satellitenabdeckung einer Satellitendachzelle (136, 138, 140; 436, 438; 440) definieren,
- einen Satz an Kommunikationsdienst-Endgeräten (32, 34, 36, 38, 40, 42, 44, 46, 48), die in der Lage sind, die Funkkommunikationssignale zu senden und/oder zu empfangen, und die in den terrestrischen Zellen (76, 78, 80, 82) und den Satellitenzellen (136, 138, 140; 436, 438, 440) verteilt sind,
- Mittel zum Zuweisen (50) von Übertragungsressourcen, wobei jede über ein Teilfrequenzband und/oder einen Zeitschlitz und/oder einen Code definiert ist, zu den Basisstationen (6, 8, 10, 12) beziehungsweise zu den Satellitenstrahlen (130, 132, 134, 430, 432, 434), wobei die Teilbänder in Bezug auf ein erstes Frequenzband, das dem Satz der Basisstationen (6, 8, 10, 12) zugeteilt ist, und auf ein zweites Frequenzband bestimmt werden, das den Satellitenstrahlen (130, 132, 134, 430, 432, 434) zugeteilt ist,
**dadurch gekennzeichnet, dass**
die Basisstationen (6, 8, 10, 12) in über Satellitenzelle (136, 138, 140; 436, 438, 440) unterscheidbarer Weise gemäß einer zeitinvarianten Verteilungsfunktion verteilt sind,
und das System Mittel zum Aufrechterhalten (52; 452) der Kongruenz, dauerhaft und einer selben Verbindungsrichtung folgend, der Abdeckung jeder Satellitenzelle (136, 138, 140; 436, 438, 440) in Bezug auf die Abdeckungen der terrestrischen Zellen (76, 78, 80, 82) umfasst, die den in der Satellitenzelle enthaltenen Basisstationen (6, 8, 10, 12) zugeordnet sind, wobei die Abdeckung einer Satellitenzelle (136; 436) zu einem vorbestimmten Satz terrestrischer Abdeckungen kongruent ist, wenn der vorbestimmte Satz an Abdeckungen vollständig in der Satellitenabdeckung eingeschlossen ist.

2. Hybrides Kommunikationssystem nach Anspruch 1, **dadurch gekennzeichnet, dass** dasselbe Frequenzband von den Basisstationen (6, 8, 10, 12) und dem Satelliten (18) gemeinsam genutzt wird.

3. Hybrides Kommunikationssystem nach Anspruch 1, **dadurch gekennzeichnet, dass** der entsprechende Satellitenstrahl (130, 132, 134, 430, 432, 434) jeder Satellitenzelle (136, 138, 140; 436, 438, 440) einen charakteristischen Öffnungswinkel θ aufweist, der als der minimale Öffnungswinkel über den Satz der azimutalen Richtungen des Strahls in Bezug auf eine Sende- oder Empfangsphasenebene des Satelliten genommen definiert ist, und dadurch, dass der minimale Öffnungswinkel θ des entsprechenden Strahls jeder Satellitenzelle kleiner als ein Winkelwert im Bereich zwischen 0,5 Grad und ein paar Grad ist, und dadurch, dass die Mittel zum Aufrechterhalten der Kongruenz (52; 452) in der Lage sind, eine Fehlausrichtung Δθ des Satellitenstrahls von dauerhaft kleiner als 0,05 Grad aufrecht zu erhalten.

4. Hybrides Kommunikationssystem nach einem der Ansprüche 1 bis 3, **dadurch gekennzeichnet, dass** der Orbit des Satelliten (18) in der Familie der geostationären Orbits (GEO), der stark elliptischen Orbits (HEO), insbesondere vom Typ Sykomore, Tundra oder Molnija, und der inklinierten geosynchronen Orbits (IGSO) umfasst ist.

5. Hybrides Kommunikationssystem nach einem der Ansprüche 1 bis 4, **dadurch gekennzeichnet, dass** die Mittel zum Aufrechterhalten der Kongruenz (52) Kalibrierungs-Endgeräte (162, 164, 166) umfassen, die in den Satellitenzellen (136, 138, 140) verteilt sind und die jedes eine Satellitenempfangsantenne (212) umfassen, wobei die Satellitenempfangsantenne (212) ein Strahlungsdiagramm aufweist, das im Wesentlichen auf einem Raumwinkel omnidirektional ist, dem Satz der Elevationen im Durchlauf des Satzes der Satellitenabdeckungen gesehen entspricht, und vom Orbittyp abhängt, auf dem der Satellit (18) läuft.

6. Hybrides Kommunikationssystem nach Anspruch 5, **dadurch gekennzeichnet, dass** jedes Kalibrierungs-Endgerät (162, 164, 166) ein Funkleistungsmessmittel (312, 342, 368) umfasst, das in der Lage ist, die Leistung eines Downlink-Verbindungs-Funksignals (311, 340, 366), das für die Kalibrierung spezifisch ist, oder die Leistung eines Funkkommunikationssignals zu messen, wobei die Auflösung der Leistungsmessung kleiner als 1 dB ist und die Genauigkeit der Messung kleiner als 5 dB ist, und ein Mittel zum Rückübertragen der vom Messmittel (312, 342, 368) gesammelten Messungen (318, 346, 370) und der Positionen der Kalibrierungs-Endgeräte, wenn dieselben nicht vorbestimmt sind.

7. Hybrides Kommunikationssystem nach einem der Ansprüche 1 bis 4, **dadurch gekennzeichnet, dass** die Mittel zum Aufrechterhalten der Kongruenz (452) umfassen
Kalibrierungs-Endgeräte (562, 564, 566), die in den Satellitenzellen (436, 438, 440) verteilt sind und jedes eine Satellitensendeantenne (310, 338, 364) umfassen, wobei die Satellitensendeantenne (310, 338, 364) ein Strahlungsdiagramm aufweist, das im Wesentlichen auf einem Raumwinkel omnidirektional ist, dem Satz der Elevationen im Durchlauf des Satzes der Satellitenabdeckungen gesehen entspricht, und vom Orbittyp abhängt, auf dem der Satellit (18) läuft, wobei jedes Kalibrierungs-Endgerät (562, 564, 566) ein Mittel zum Senden (712, 722, 732) eines Funksignals auf einer Uplink-Satellitenverbindung (710, 720, 730), die für die Kalibrierung spezifisch ist, oder von leistungskalibrierter Funkkommunikation umfasst,
und ein an Bord des Satelliten (18) oder einer Zugangsstation (24) gelegenes Messmittel (568), das in der Lage ist, die Leistung des Kalibrierungs-Funksignals jedes Kalibrierungs-Endgeräts auf der entsprechenden Uplink-Satelliten-Rückverbindung zu messen, wobei die Auflösung der Leistungsmessung kleiner als 1 dB ist und die Genauigkeit der Messung kleiner als 5 dB ist, und ein Mittel zum Rückübertragen der vom Messmittel gesammelten Messungen und der Positionen der Kalibrierungs-Endgeräte, wenn dieselben nicht vorbestimmt sind.

8. Hybrides Kommunikationssystem nach einem der Ansprüche 5 bis 7, **dadurch gekennzeichnet, dass** die Anzahl an Kalibrierungs-Endgeräten (162, 164, 166; 562, 564, 566) größer als oder gleich 50 ist.

9. Hybrides Kommunikationssystem nach einem der Ansprüche 5 bis 7, **dadurch gekennzeichnet, dass** Kalibrierungs-Endgeräte (162, 164, 166; 562, 564, 566) im Bereich einer gewissen Anzahl von Basisstationen (6, 8, 10, 12) angeordnet sind, deren Lokation mit Genauigkeit bekannt ist.

10. Hybrides Kommunikationssystem nach einem der Ansprüche 5 bis 8, **dadurch gekennzeichnet, dass** eine gewisse Anzahl an Kalibrierungs-Endgeräten auf FEMTO-Repeatern (104) angeordnet sind, die dazu vorgesehen sind, die Ausbreitung der Wellen im Inneren von Gebäuden (106) zu verbessern, wobei jeder Repeater (104) mit einer Lokalisierungseinheit (336) versehen ist, wobei das Kalibrierungs-Endgerät (564) in der Lage ist, seine Lokation über von der Lokalisierungseinheit (536) gelieferte Lokalisierungsinformationen zu senden.

11. Hybrides Kommunikationssystem nach einem der Ansprüche 5 bis 10, **dadurch gekennzeichnet, dass** Kalibrierungs-Endgeräte (664, 566) mobile Kommunikationsdienst-Endgeräte sind, die ein Lokalisierungsmittel (326, 372) umfassen, entnommen aus dem Satz, der von den globalen Positionierungsempfängern, von einer Satellitenkonstellation und den Mitteln zum Extrahieren von Positionsinformationen gebildet wird, die von einem mobilen terrestrischen Netz bestimmt werden, wobei das Kalibrierungs-Endgerät in der Lage ist, seine Lokation über von dem Lokalisierungsmittel (326, 372) gelieferte Lokalisierungsinformationen zu senden.

12. Hybrides Kommunikationssystem nach einem der Ansprüche 1 bis 10, **dadurch gekennzeichnet, dass** es ein Verarbeitungsmittel (172; 572) umfasst, das in der Lage ist, die Leistungsmessungsinformationen zu empfangen, die jedem Kalibrierungs-Endgerät zugeordnet sind, und anhand eines erwarteten Strahlungsdiagramms am Boden einen Fehlausrichtungs-Korrekturwinkel, der dem Satz der Strahlen gemein ist, oder eine Korrektur der Formation der Satellitenstrahlen zu bestimmen, wobei das Verarbeitungsmittel (172; 572) über eine oder mehrere Kommunikationsverbindungen, die unter den Verbindungen eines Bodennetzes vom Typ Internet, den Verbindungen eines zellularen terrestrischen Netzes, Satellitenverbindungen umfasst sind, an das Messmittel (568) oder die -mittel (312, 342, 368) angeschlossen ist.

13. Hybrides Kommunikationssystem nach Anspruch 12, **dadurch gekennzeichnet, dass** die Genauigkeit der Schätzung der erforderlichen Korrektur gleichzeitig abhängt
von der Gesamtanzahl an Kalibrierungs-Endgeräten (162, 164, 166; 562, 564, 566) in der Gesamtheit der Satellitenstrahlen (130, 132, 134; 430, 432, 434) und/oder der Verteilung der Kalibrierungs-Endgeräte pro Satellitenstrahl, von der Messgenauigkeit der Leistungsmessmittel, von den Sende- und/oder Empfangsstrahlungsdiagrammen der Antennen (212) der Kalibrierungs-Endgeräte.

14. Hybrides Kommunikationssystem nach einem der Ansprüche 12 bis 13, **dadurch gekennzeichnet, dass** das Verarbeitungsmittel (52; 452) in der Lage ist, die Satellitenstrahlen über eine lokale Schätzung pro Strahl, wobei eine ausreichende Anzahl an Kalibrierungs-Endgeräten in jedem Strahl vorgesehen ist, oder eine globale Schätzung zu korrigieren, welche die Gesamtheit der Kalibrierungs-Endgeräte in einem einzigen Strahlungsdiagramm integriert, das mehrere Strahle zusammenfasst, wobei eine Schätzung in der Familie der Verfahren umfasst ist, die von der Methode der kleinsten Quadrate, den Korrelationsmethoden gebildet wird.

15. Verarbeitungsverfahren zur Aufrechterhaltung der Kongruenz zwischen Abdeckungen von terrestrischen Funkkommunikationszellen und Abdeckungen von als Dach dienenden Satellitenzellen, die von mindestens einem Satelliten (18) gebildet werden, in einem hybriden Telekommunikationssystem gemäß einem der Ansprüche 1 bis 14, umfassend die Schritte, die darin bestehen, dass:
Leistungen von Kalibrierungs-Funksignalen entweder über Kalibrierungs-Endgeräte, die als Empfänger dienen, in Downlink-Hinverbindung, oder über Messmittel, die an Bord eines Satelliten (18) oder einer Zugangsstation (24) liegen, in Uplink-Rückverbindung gemessen (702) und zu einem Verarbeitungsmittel (172, 572) weitergeleitet werden,
das Verarbeitungsmittel (172, 572) eine in Hinblick auf den Fehlausrichtungswinkel auf einer Satellitenantennen-Trägerstruktur, oder auf Amplituden-/Phasenversatz-Koeffizienten von Abstrahlelementen erforderliche Korrektur anhand der im Schritt (704) gesammelten Leistungsmessungen und der zeitinvarianten Verteilungsfunktion der Basisstationen (6, 8, 10, 12) in den Satellitenzellen (136, 138, 140; 436, 438, 440) schätzt (704), wobei die Kongruenzbedingung für jede Satellitenzelle erfüllt ist, wenn die Abdeckung jeder Satellitenzelle den Satz der Abdeckungen der terrestrischen Zellen enthält, die den über die Verteilungsfunktion als in der Satellitenzelle umfasst bestimmten Basisstationen zugeordnet sind,
die im Schritt (704) geschätzte Korrektur auf den Korrekturmechanismus (128, 129) der Satellitenstrahlen angewendet wird (706).

## Claims

1. A hybrid cellular radio communication system comprising
- a network of terrestrial base stations (6, 8, 10, 12) interconnected together and connected to a terrestrial infrastructure (14), each able, in an associated frequency sub-band, to emit in a forward downlink (56, 58, 60, 62) and/or to receive in a reverse uplink (66, 68, 70, 72) service radiocommunication signals and defining, each by its radio range, an uplink and/or a downlink coverage of a terrestrial radiocommunication cell (76, 78, 80, 82),
- at least one communication satellite (16, 18, 20) connected to the terrestrial infrastructure (14) by at least one access station (24) through a bidirectional backhaul link (26, 28), and able to emit in a forward satellite downlink (96, 98, 100, 102, 110) and/or to receive in a reverse satellite uplink (86, 88, 90, 92, 100) of the service radiocommunication signals distributed in satellite radiocommunication beams (130, 132, 134; 430, 432, 434), the satellite beams (130, 132, 134, 430, 432, 434) each being associated with a frequency band and each defining by its ground radio range an uplink and/or a downlink satellite coverage of a satellite umbrella cell (136, 138, 140, 436, 438, 440),
- a set of communication service terminals (32, 34, 36, 38, 40, 42, 44, 46, 48) able to emit and/or receive the radiocommunication signals, and distributed in the terrestrial cells (76, 78, 80, 82) and satellite cells (136, 138, 140; 436, 438, 440),
- means for allocating (50) transmission resources, each being defined by a frequency sub-band and/or a time slot and/or a code, to the base stations (6, 8, 10, 12), respectively to the satellite beams (130, 132, 134, 430, 432, 434), the sub-bands being determined relative to a first frequency band allocated to all the base stations (6, 8, 10, 12) and to a second frequency band allocated to the satellite beams (130, 132, 134, 430, 432, 434),
**characterized in that**
the base stations (6, 8, 10, 12) are distributed in a discernable manner by satellite cell (136, 138, 140, 436, 438, 440) according to a time-invariant distribution function,
and the system comprises means (52; 452) for maintaining the congruence, continuously and in the same link direction, of the coverage of each satellite cell (136, 138, 140, 436, 438, 440) relative to the coverages of the terrestrial cells (76, 78, 80, 82) associated to the base stations (6, 8, 10, 12) contained in said satellite cell, the coverage of a satellite cell (136; 436) being congruent with a predetermined set of terrestrial coverages when said predetermined set of coverages is totally included in the satellite coverage.

2. The hybrid communication system according to claim 1, **characterized in that** the same frequency band is shared by the base stations (6, 8, 10, 12) and the satellite (18).

3. The hybrid communication system according to claim 1, **characterized in that** the corresponding satellite beam (130, 132, 134, 430, 432, 434) of each satellite cell (136, 138, 140, 436, 438, 440) has a characteristic aperture angle θ defined as the minimum aperture angle taken from the set of azimuthal directions of the beam relative to an emitting or receiving phase plane of the satellite, and **in that** the minimum aperture angle θ of the corresponding beam of each satellite cell is less than an angle value comprised between 0.5 degrees and a few degrees and **in that** the means for maintaining the congruence (52; 452) are able to maintain a misalignment Δθ of the satellite beam continuously below 0.05 degrees.

4. The hybrid communication system according to any one of claims 1 to 3, **characterized in that** the orbit of the satellite (18) is comprised in the family of the geostationary orbits (GEO), the highly elliptical orbits (HEO) in particular of the Sycamores, Tundra or Molnya type and the inclined geosynchronous orbits (IGSO).

5. The hybrid communication system according to any of claims 1 to 4, **characterized in that** the means for maintaining the congruence (52) comprise calibration terminals (162, 164, 166) distributed in the satellite cells (136, 138, 140) and including each a satellite receiving antenna (212), the satellite receiving antenna (212) having a radiation pattern substantially omnidirectional at a solid angle, corresponding to all the elevations seen by scanning all the satellite coverages and depending on the type of orbit on which the satellite is moving (18).

6. The hybrid communication system according to claim 5, **characterized in that** each calibration terminal (162, 164, 166) comprises a means for measuring the radiofrequency power (312, 342, 368) able to measure the power of a downlink radiofrequency signal (311, 340, 366) specific to the calibration or the power of a radiocommunication signal, the power measuring resolution being less than 1 dB and the measurement accuracy being less than 5 dB, and a means for retransmitting the measurements (318, 346, 370) collected by the measuring means (312, 342, 368) and the positions of calibration terminals when they are not predetermined.

7. The hybrid communication system according to any of claims 1 to 4, **characterized in that** the means for maintaining the congruence (452) comprise
calibration terminals (562, 564, 566) distributed in the satellite cells (436, 438, 440) and each including a satellite emitting antenna (310, 338, 364), the satellite emitting antenna (310, 338, 364) having a radiation pattern substantially omnidirectional at a solid angle, corresponding to all the elevations seen by scanning all the satellite coverages and depending on the type of orbit on which the satellite (18) is moving, each calibration terminal (562, 564, 566), including a means for emitting (712, 722, 732) a radiofrequency signal on a satellite uplink (710, 720, 730) specific to the calibration or a power-calibrated radiocommunication signal,
and a measuring means (568) located onboard the satellite (18) or onboard an access station (24) able to measure the power of the radiofrequency calibration signal of each calibration terminal on the corresponding satellite reverse uplink, the resolution of the power measurement being less than 1 dB and the accuracy of the measurement being less than 5 dB, and a means for retransmitting measurements collected by the measuring means and positions of the calibration terminals when they are not predetermined.

8. The hybrid communication system according to any one of claims 5 to 7, **characterized in that** the number of calibration terminals (162, 164, 166; 562, 564, 566) is greater than or equal to 50.

9. The hybrid communication system according to any one of claims 5 to 7, **characterized in that** calibration terminals (162, 164, 166; 562, 564, 566) are disposed at a number of base stations (6, 8, 10, 12) whose location is known with accuracy.

10. The hybrid communication system according to any one of claims 5 to 8, **characterized in that** a number of calibration terminals are disposed on FEMTO repeaters (104) intended to improve the propagation of the waves inside buildings (106), each repeater (104) being provided with a location unit (336), the calibration terminal (564) being able to emit its location by location information provided by the location unit (536).

11. The hybrid communication system according to any one of claims 5 to 10, **characterized in that** calibration terminals (664, 566) are mobile communication service terminals which comprise a location means (326, 372) taken from the set and which are formed by the global positioning receivers by a satellite constellation and the means for extracting information of positioning determined by a terrestrial mobile network, the calibration terminal being able to emit its location by location information provided by the location means (326, 372).

12. The hybrid communication system according to any one of claims 1 to 10, **characterized in that** it comprises a processing means (172; 572) adapted to receive the power measurement information associated with each calibration terminal and to determine, from an expected ground radiation pattern, a misalignment correction angle common to all the beams or a correction of the formation of the satellite beams, the processing means (172; 572) being connected to the measuring means (568) or means (312, 342, 368) by one or more communication links comprised among the links of an Internet-type ground network, the links of a cellular terrestrial network, satellite links.

13. The hybrid communication system according to claim 12, **characterized in that** the estimation accuracy of the required correction depends on both the total number of calibration terminals (162, 164, 166; 562, 564, 566) in all the satellite beams (130, 132, 134, 430, 432, 434) and/or the distribution of the calibration terminals by satellite beam, the measuring accuracy of the power measuring means, emitting and/or receiving radiation patterns of the antennas (212) of the calibration terminals.

14. The hybrid communication system according to any one of claims 12 to 13, **characterized in that** the processing means (52; 452) is able to correct the satellite beams by a local beam estimation, a sufficient number of calibration terminals being provided in each beam or a global estimation integrating all the calibration terminals in a single radiation pattern merging several beams, an estimation being comprised in the family of the methods formed by the least square method, the correlation methods.

15. A method for processing the maintaining of the congruence between radiocommunication terrestrial cell coverages and satellite cell coverages serving as umbrella created by at least one satellite (18) in a hybrid telecommunication system in accordance with any one of claims 1 to 14, comprising the steps consisting in:
radiofrequency calibration signal powers are measured (702) either by calibration terminals operating as a receiver in forward downlink, or by measuring means located aboard a satellite (18) or aboard an access station (24) in reverse uplink, and forwarded to a processing means (172, 572),
the processing means (172, 572) estimates (704) a correction required in terms of misalignment angle on a satellite antenna carrier structure, or of amplitude/phase shift coefficients of radiating elements, from the power measurements collected in step (704) and from the time-invariant distribution function of the base stations (6, 8, 10, 12) in the satellite cells (136, 138, 140; 436, 438, 440), the congruence condition being satisfied for each satellite cell when the coverage of each satellite cell contains all the coverages of the terrestrial cells associated with the base stations determined by the distribution function as being comprised in the satellite cell,
the correction estimated in step (704) is applied (706) to the mechanism (128, 129) for correcting the satellite beams.
